# EUROPEAN PATENT APPLICATION

(11) **EP 3 376 785 A1**
(43) Date of publication of application: **19.09.2018**
(21) Application number: 16863871.6
(22) Date of filing: 24.08.2016
(51) Int. Cl.: H04W 4/90, H04W 40/02, H04W 48/18, H04W 88/02, H04W 92/18

(54) **DEVICE AND METHOD**

(30) Priority: 13.11.2015 JP 2015222689
(71) Applicant: Sony Corporation, Tokyo 108-0075 (JP)
(72) Inventor: KIMURA, Ryota, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2016/074677
(87) International publication number: WO 2017/081907

(57) **Abstract**

[Object] It is possible to report information to more terminal devices.

[Solution] A device including: a communication unit configured to perform wireless communication; an acquiring unit configured to acquire report information from a first device via the wireless communication; and a communication control unit configured to perform control such that the report information is transmitted to a second device located within a predetermined communication range from the communication unit in a case in which the acquired report information includes information of a predetermined type.

## Description

### Technical Field

The present disclosure relates to a device and a method.

### Background Art

Techniques for reporting information requiring urgency such as information related to disasters such as earthquakes or tsunamis to more users have been variously proposed. For example, in communication systems (so-called cellular systems) based on standards such as 3G, Long Term Evolution (LTE), and LTE-Advanced (LTE-A), a function for reporting emergency information called a cell broadcast emergency (CBE), a commercial mobile alert service (CMAS), an earthquake and tsunami warning system (ETWS), or the like is provided. As a specific example, Patent Literature 1 discloses an example of a technique for notifying of emergency information.

### Citation List

### Patent Literature

Patent Literature 1: JP 2001-339536A

### Disclosure of Invention

### Technical Problem

On the other hand, there are cases in which the report of the emergency information based on the function such as the ETWS is given only to terminal devices located in a communication area of a base station (or a so-called relay station) (or a cell provided by the base station). In this case, for example, a user located outside the communication area of the base station may be unable to receive the report of the emergency information even in a situation in which the report of the emergency information is given from the base station to the respective terminal devices.

In this regard, the present disclosure proposes a device and a method which are capable of reporting information to more users in a more preferable form.

### Solution to Problem

According to the present disclosure, there is provided a device including: a communication unit configured to perform wireless communication; an acquiring unit configured to acquire report information from a first dcvicc via the wireless communication; and a communication control unit configured to perform control such that the report information is transmitted to a second device located within a predetermined communication range from the communication unit in a case in which the acquired report information includes information of a predetermined type.

In addition, according to the present disclosure, there is provided a device including: a communication unit configured to perform wireless communication; and a communication control unit configured to perform control such that a notification of information indicating a radio resource used for a first device to redeliver report information delivered to the first device to a second device is given from the communication unit to the first device.

In addition, according to the present disclosure, there is provided a device including: a communication unit configured to perform wireless communication; an acquiring unit configured to acquire report information from an external device via the wireless communication; and a control unit configured to control an operation related to at least any one of a vehicle and a navigation device in accordance with content of the report information in a case in which the acquired report information includes information of a predetermined type.

In addition, according to the present disclosure, there is provided a method including: performing wireless communication; acquiring report information from a first device via the wireless communication; and performing, by a processor, control such that the report information is transmitted to a second device located within a predetermined communication range in a case in which the acquired report information includes information of a predetermined type.

In addition, according to the present disclosure, there is provided a method including: performing wireless communication; and performing, by a processor, control such that a notification of information indicating a radio resource used for a first device to redeliver report information delivered to the first device to a second device is given to the first device.

In addition, according to the present disclosure, there is provided a method including: performing wireless communication; acquiring report information from an external device via the wireless communication; and controlling, by a processor, an operation related to at least any one of a vehicle and a navigation device in accordance with content of the report information in a case in which the acquired report information includes information of a predetermined type.

In addition, according to the present disclosure, there is provided a program causing a computer to execute: performing wireless communication; acquiring report information from an external device via the wireless communication; and controlling an operation related to at least any one of a vehicle and a navigation device in accordance with content of the report information in a case in which the acquired report information includes information of a predetermined type.

### Advantageous Effects of Invention

As described above, according to the present disclosure, a device and a method which are capable of reporting information to more users in a more preferable form are provided.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram for describing an overview of an ETWS.
[FIG. 2] FIG. 2 is a sequence diagram illustrating an example of a delivery flow of an ETWS in LTE.
[FIG. 3] FIG. 3 is a diagram for describing an example of a configuration of a communication system according to one embodiment of the present disclosure.
[FIG. 4] FIG. 4 is a diagram for describing a logical interface and a physical interface.
[FIG. 5] FIG. 5 is a block diagram illustrating an example of a logical configuration of a communication control device according to the embodiment.
[FIG. 6] FIG. 6 is a block diagram illustrating an example of a logical configuration of a base station according to the embodiment.
[FIG. 7] FIG. 7 is a block diagram illustrating an example of a logical configuration of a terminal device according to the embodiment.
[FIG. 8] FIG. 8 is a sequence diagram illustrating an example of a process flow related to redelivery of a message.
[FIG. 9] FIG. 9 is a sequence diagram illustrating another example of a process flow related to redelivery of a message.
[FIG. 10] FIG. 10 is a flowchart illustrating an example of a flow of a series of processes related to redelivery of a message by a terminal device.
[FIG. 11] FIG. 11 is a flowchart illustrating another example of a flow of a series of processes related to redelivery of a message by a terminal device.
[FIG. 12] FIG. 12 is a flowchart illustrating an example of a flow of a process related to reception of a message by a terminal device.
[FIG. 13] FIG. 13 is a flowchart illustrating an example of a flow of a process related to transmission of a message by a terminal device.
[FIG. 14] FIG. 14 is a block diagram illustrating an example of a functional configuration related to reception of information by a terminal device.
[FIG. 15] FIG. 15 is a block diagram illustrating an example of a functional configuration related to reception of information by a terminal device.
[FIG. 16] FIG. 16 is a block diagram illustrating an example of a functional configuration related to transmission of information by a terminal device.
[FIG. 17] FIG. 17 is a block diagram illustrating an example of a functional configuration related to transmission of information by a terminal device.
[FIG. 18] FIG. 18 is a block diagram illustrating an example of a functional configuration related to reception of information by a terminal device.
[FIG. 19] FIG. 19 is a block diagram illustrating an example of a functional configuration related to reception of information by a terminal device.
[FIG. 20] FIG. 20 is a sequence diagram illustrating an example of a process flow in a case in which report information delivered from a base station is caused to multihop between terminal devices.
[FIG. 21] FIG. 21 is a flowchart illustrating an example of a flow of a series of processes of a terminal device in a case in which report information is caused to multihop between terminal devices.
[FIG. 22] FIG. 22 is a flowchart illustrating another example of a flow of a series of processes of a terminal device in a case in which report information is caused to multihop between terminal devices.
[FIG. 23] FIG. 23 is a sequence diagram illustrating an example of a process flow in a case in which a terminal device performs redelivery to another terminal device using another communication system.
[FIG. 24] FIG. 24 is a flowchart illustrating an example of a flow of a series of processes of a terminal device in a case in which a terminal device performs redelivery to another terminal device using another communication system.
[FIG. 25] FIG. 25 is a sequence diagram illustrating an example of a process flow in a case in which predetermined operation control is executed in accordance with content of a message in a case in which a terminal device receives a message of a predetermined type.
[FIG. 26] FIG. 26 is a flowchart illustrating an example of a flow of a series of operations in a case in which a terminal device which has received delivery of emergency information presents information related to an event indicated by the emergency information related to map information.
[FIG. 27] FIG. 27 is a flowchart illustrating an example of a flow of a series of operations in a case in which information related to an event indicated by emergency information is presented on map information.
[FIG. 28] FIG. 28 illustrates another example of display in a case in which content reported as emergency information is presented on map information.
[FIG. 29] FIG. 29 illustrates another example of display in a case in which content reported as emergency information is presented on map information.
[FIG. 30] FIG. 30 is a flowchart illustrating an example of a flow of a series of processes in a case in which various kinds of operation control are executed in accordance with whether or not a terminal device is located within a caution area.
[FIG. 31] FIG. 31 is an explanatory diagram for describing an example of a report form of information from a terminal device to a user.
[FIG. 32] FIG. 32 is a block diagram illustrating an example of a schematic configuration of a server to which the technology of the present disclosure can be applied.
[FIG. 33] FIG. 33 is a block diagram illustrating a first example of a schematic configuration of an eNB to which the technology of the present disclosure can be applied.
[FIG. 34] FIG. 34 is a block diagram illustrating a second example of the schematic configuration of the eNB to which the technology of the present disclosure can be applied.
[FIG. 35] FIG. 35 is a block diagram illustrating an example of a schematic configuration of a smartphone to which the technology of the present disclosure can be applied.
[FIG. 36] FIG. 36 is a block diagram illustrating an example of a schematic configuration of a car navigation device to which the technology of the present disclosure can be applied.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, the description will proceed in the following order.
1. Emergency information report function
1.1. ETWS
1.2. Example of message format
2. Technical problem
3. Configuration example
3.1. Communication system
3.2. Communication control device
3.3. Base station
3.4. Terminal device
4. Technical features
4.1. Example of sequence related to redelivery of message
4.2. Redelivery of message by terminal device
4.3. Control example of transmission and reception of information between nodes
4.4. Multihop of report information between terminal devices
4.5. Redelivery using different communication systems
4.6. Operation terminal device receiving delivery of message
5. Application examples
5.1. Application example related to communication control device
5.2. Application example related to base station
5.3. Application example related to terminal device
6. Conclusion

### <<1. Emergency information report function>>

In so-called communication systems such as cellular systems based on standards such as 3G, LTE, and LTE-A, there are cases in which a function for reporting emergency information to terminal devices (users) in a communication area is provided. There are cases in which the function of reporting the emergency information is called, for example, a CBE, a CMAS, an ETWS, or the like. For example, the CMAS and the ETWS are standardized as system information in a communication protocol (particularly, LTE) specified in 3GPP.

### <<1.1. ETWS>>

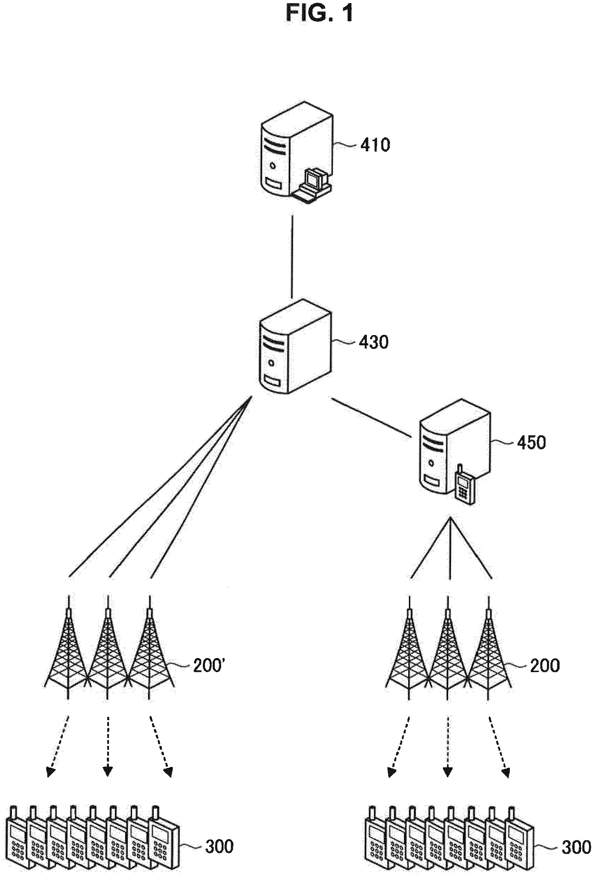

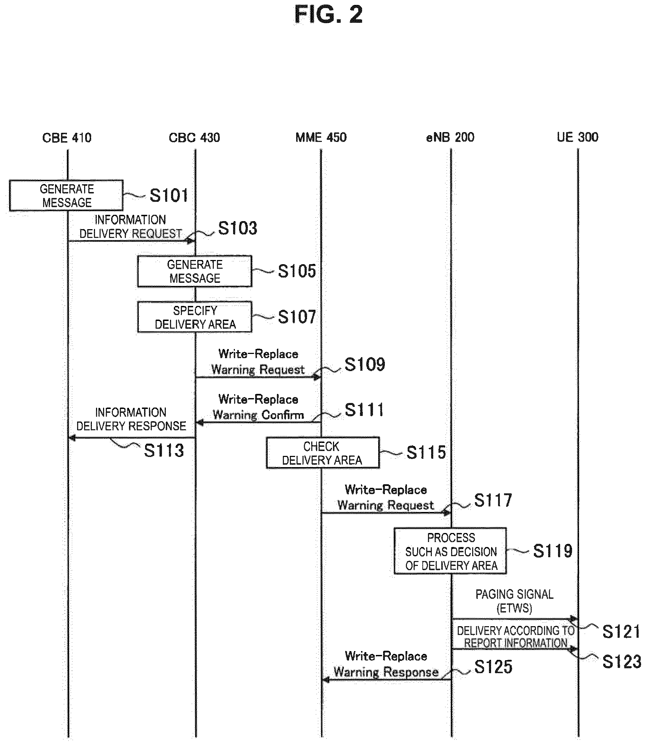

In cellular systems (or mobile communication systems) represented by 3G, LTE, and LTE-A, an ETWS is defined and implemented. First, an overview of the ETWS will be described with reference to FIG. 1 and FIG. 2.

For example, FIG. 1 is an explanatory diagram for describing an overview of the ETWS, and illustrates an example of a configuration of the ETWS specified in 3GPP. The ETWS is mainly used for delivery of emergency messages, but the ETWS can be used not only for delivery of emergency information at the time of a disaster or the like but also for delivery of information other than emergency information.

As illustrated in FIG. 1, in the system configuration of the ETWS, for example, in the case of 3G, a cell broadcast entity (CBE) 410, a cell broadcast center (CBC) 430, a radio network controller (RNC) 200', and a terminal device (UE) 300 are included. Further, the terminal device 300 is also referred to as a user. The user may also be referred to as a user equipment (UE). Here, the UE may be a UE defined in LTE or LTE-A and may indicate a communication device more generally. Further, in the following description, LTE and LTE-A are also collectively referred to simply as "LTE."

The CBE 410 corresponds to a message delivery source. For example, in a case in which an emergency message such as an earthquake alert or a tsunami alert is delivered, the meteorological office corresponds to the CBE 410. In a case in which the necessity of message delivery occurs in the CBE 410, the CBC 430 corresponding to an information delivery server in the cellular system accepts a message delivery request from the CBE 410 and generates a corresponding delivery message.

Further, in the case of 3G, the CBC 430 transmits the message delivery request to the RNC 200' corresponding to a wireless control device. In response to the message delivery request transmitted from the CBC 430, the RNC 200' delivers (for example, broadcasts) the message to the terminal devices 300 subordinate thereto.

Further, in the case of LTE, a mobility management entity (MME) 450 and a base station (eNode B (eNB)) 200 are installed between the CBC 430 and the UE 300 in place of the RNC 200'. In other words, the MME 450 is interposed between the CBC 430 and the base station 200. With such a configuration, even in a case in which the number of base stations (eNB) 200 increases, it is possible to perform control such that no direct load is applied to the CBC 430.

Further, the base station 200 is a base station of the cellular system. The base station 200 performs wireless communication with the terminal device 300 located within a cell. For example, the base station 200 transmits a downlink signal to the terminal device 300 and receives an uplink signal from the terminal device 300. Here, the base station 200 may be a base station assumed in a multi-cell system such as a heterogeneous network (HetNet) or small cell enhancement (SCE). In other words, the base station 200 may be a macrocell base station that manages a so-called macrocell area or a small cell base station that manages a so-called small cell area.

Further, the terminal device 300 performs wireless communication with the base station 200 in the cellular system. For example, the terminal device 300 receives a downlink signal from the base station 200 and transmits an uplink signal to the base station 200.

Here, an example of a delivery flow of the ETWS in LTE will be described with reference to FIG. 2. FIG. 2 is a sequence diagram illustrating an example of a delivery flow of the ETWS in LTE.

In a case in which the necessity of message delivery (an event or the like) occurs in the CBE 410 (S101), the CBE 410 transmits a request related to the message delivery (hereinafter also referred to as an "information delivery request") to the CBC 430 (S103). The CBC 430 generates a message in accordance with the information delivery request from the CBE 410 (S105), and specifies an area to which the generated message is delivered (SI07). Then, the CBC 430 transmits a delivery request (for example, Write-Replace Warning Request) to the MME 450 that manages the specified area (S109). Upon receiving the delivery request from the CBC 430, the MME 450 transmits a response (for example, Write-Replace Warning Confirm) indicating delivery of the message to the CBC 430 (S111). Upon receiving the response to the delivery request from the MME 450, the CBC 430 transmits information indicating the response to the information delivery request to the CBE 410 which is a transmission source of the information delivery request as a response to the information delivery request (hereinafter also referred to as an "information delivery response") (S113).

The MME 450 checks the base station 200 located in the area serving as the delivery target of the message from among the base stations (eNB) 200 subordinate thereto (S115) and transmits a delivery request (for example, Write-Replace Warning Request) to the base station 200 (S117). In a case in which there are a plurality of sectors or cells subordinate to the base station 200, the base station 200 which has received the delivery request executes a process such as decision of a delivery area (S119) and delivers a message to the terminal device 300.

Further, as a procedure of message delivery from the base station 200 to the terminal device 300, the base station 200 first gives a notification indicating that the message will be delivered to the terminal device 300 by transmitting a paging signal to the terminal device 300 (S121). Further, the base station 200 then delivers the message to the terminal device 300 as report information (S123). Further, in a case in which the transmission of the message to the terminal device 300 is completed, the base station 200 transmits a response (for example, Write-Replace Warning Confirm) to the MME 450 (S125).

The overview of the ETWS has been described above with reference to FIGS. 1 and 2.

### <1.2. Example of message format>

Next, as an example of a format of a message for reporting the emergency information, particularly, message formats of the ETWS and the CMAS specified in LTE are presented below as a reference.

Specifically, a Primary Notification message and a Secondary Notification message of the ETWS are specified as SystemlnformationBlockTypes 10 and 11 in the 3GPP standard. For example, Table 1 below shows a format of the Primary Notification message of the ETWS.

### [Table 1]

**Table 1: Primary Notification message of ETWS (TS36.331, SystemInformationBlockType10)**

| ***SystemInformationBlockType10* field descriptions** |
|---|
| ***messageIdentifier*** |
| Identifies the source and type of ETWS notification. The leading bit (which is equivalent to the leading bit of the equivalent IE defined in TS 36.413 [39, 9.2.1.44]) contains bit 7 of the first octet of the equivalent IE, defined in and encoded according to TS 23.041 [37, 9.4.3.2.1], while the trailing bit contains bit 0 of the second octet of the same equivalent IE. |

| ***serialNumber*** |
|---|
| Identifies variations of an ETWS notification. The leading bit (which is equivalent to the leading bit of the equivalent IE defined in TS 36.413 [39, 9.2.1.45]) contains bit 7 of the first octet of the equivalent IE, defined in and encoded according to TS 23.041 [37, 9.4.3.2.2], while the trailing bit contains bit 0 of the second octet of the same equivalent IE. |

| ***dummy*** |
|---|
| This field is not used in the specification. If received it shall be ignored by the UE. |

| ***warningType*** |
|---|
| Identifies the warning type of the ETWS primary notification and provides information on emergency user alert and UE popup. The first octet (which is equivalent to the first octet of the equivalent IE defined in TS 36.413 [39, 9.2.1.50]) contains the first octet of the equivalent IE defined in and encoded according to TS 23.041 [37, 9.3.24], and so on. |

Further, Table 2 below shows a format of the Primary Notification message of the ETWS.

### [Table 2]

**Table 1: Secondary Notification message of ETWS (TS36.331, SystemInformationBlockType11)**

| ***SystemInformationBlockType11* field descriptions** |
|---|
| ***dataCodingScheme*** |
| Identifies the alphabet/coding and the language applied variations of an ETWS notification. The octet (which is equivalent to the octet of the equivalent IE defined in TS 36.413 [39, 9.2.1.52]) contains the octet of the equivalent IE defined in TS 23.041 [37, 9.4.3.2.3] and encoded according to TS 23.038 [38]. |

| ***messageIdentifier*** |
|---|
| Identifies the source and type of ETWS notification. The leading bit (which is equivalent to the leading bit of the equivalent IE defined in TS 36.413 [39, 9.2.1.44]) contains bit 7 of the first octet of the equivalent IE, defined in and encoded according to TS 23.041 [37, 9.4.3.2.1], while the trailing bit contains bit 0 of second octet of the same equivalent IE. |

| ***SystemInformationBlockType11* field descriptions** |
|---|
| ***serialNumber*** |
| Identifies variations of an ETWS notification. The leading bit (which is equivalent to the leading bit of the equivalent IE defined in TS 36.413 [39, 9.2.1.45]) contains bit 7 of the first octet of the equivalent IE, defined in and encoded according to TS 23.041 [37, 9.4.3.2.2], while the trailing bit contains bit 0 of second octet of the same equivalent IE. |

| ***warningMessageSegment*** |
|---|
| Carries a segment of the *Warning Message Contents* IE defined in TS 36.413 [39, 9.2.1.53]. The first octet of the *Warning Message Contents* IE is equivalent to the first octet of the *CB data* IE defined in and encoded according to TS 23.041 [37, 9.4.2.2.5] and so on. |

| ***warningMessageSegmentNumber*** |
|---|
| Segment number of the ETWS warning message segment contained in the SIB. A segment number of zero corresponds to the first segment, one corresponds to the second segment, and so on. |

| ***warningMessageSegmentType*** |
|---|
| Indicates whether the included ETWS warning message segment is the last segment or not. |

Further, a Notification message of the CMAS is specified as SystemlnformationBlockType 12 in the 3GPP standard. Table 3 below shows a format of the Notification message of the CMAS.

### [Table 3]

**Table 3: 2: Notification message of CMAS (TS36.331, SystemInformationBlockType12)**

| ***SystemInformationBlockType12* field descriptions** |
|---|
| ***dataCodingScheme*** |
| Identifies the alphabet/coding and the language applied variations of a CMAS notification. The octet (which is equivalent to the octet of the equivalent IE defined in TS 36.413 [39, 9.2.1.52]) contains the octet of the equivalent IE defined in TS 23.041 [37, 9.4.3.2.3] and encoded according to TS 23.038 [38]. |

| ***messageIdentifier*** |
|---|
| Identifies the source and type of CMAS notification. The leading bit (which is equivalent to the leading bit of the equivalent IE defined in TS 36.413 [39, 9.2.1.44]) contains bit 7 of the first octet of the equivalent IE, defined in and encoded according to TS 23.041 [37, 9.4.3.2.1], while the trailing bit contains bit 0 of second octet of the same equivalent IE. |

| ***serialNumber*** |
|---|
| Identifies variations of a CMAS notification. The leading bit (which is equivalent to the leading bit of the equivalent IE defined in TS 36.413 [39, 9.2.1.45]) contains bit 7 of the first octet of the equivalent IE, defined in and encoded according to TS 23.041 [37, 9.4.3.2.2], while the trailing bit contains bit 0 of second octet of the same equivalent IE. |

| ***SystemInformationBlockType12* field descriptions** |
|---|
| ***warningMessageSegment*** |
| Carries a segment of the *Warning Message Contents* IE defined in TS 36.413 [39]. The first octet of the *Warning Message Contents* IE is equivalent to the first octet of the *CB data* IE defined in and encoded according to TS 23.041 [37, 9.4.2.2.5] and so on. |

| ***warningMessageSegmentNumber*** |
|---|
| Segment number of the CMAS warning message segment contained in the SIB. A segment number of zero corresponds to the first segment, one corresponds to the second segment, and so on. |

| ***warningMessageSegmentType*** |
|---|
| Indicates whether the included CMAS warning message segment is the last segment or not. |

Further, the messages of the ETWS and the CMAS described above are delivered using a physical channel in LTE such as, for example, a physical broadcast channel (PBCH) or a physical downlink shared channel (PDSCH).

### <<2. Technical problem>>

Next, a technical problem related to an embodiment of the present disclosure will be described. As described above, there are cases in which the report of the emergency information based on the function such as the ETWS is given only to terminal devices located in a communication area of a base station (or a so-called relay station) (or a cell provided by the base station). In this case, for example, the terminal device located outside the communication area of the base station is unable to receive the emergency information even in a situation in which the emergency information is reported from the base station.

In most cases, content to be reported as the emergency information is content desired to be reported to more users more promptly such as information related to disasters such as earthquakes, tsunamis, or the like.

Further, if technologies such as a so-called smart city, a smart grid, and a smart Intelligent Transport System (ITS) which are currently under review are considered, a target to which the emergency information is reported is not necessarily limited to only the terminal device held by the user. For example, there is a demand for a mechanism in which devices or the like applied in technologies called Machine Type Communication (MTC) and so-called vehicular-to-X (something) (V2X) can be set as the target to which the emergency information is reported.

In view of such a situation, a communication system according to one embodiment of the present disclosure is not limited to the report of the emergency information only to the inside of the communication area of the base station or the like, and a mechanism capable of reporting the emergency information to terminal devices located in a broader range (that is, more terminal devices) (that is, a mechanism capable of increasing a range in which the emergency information reaches) is proposed. Further, in the following description, in a case in which the communication area of the base station is mentioned, it is assumed to include the cell provided by the base station.

### <<3. Configuration example>>

### <3.1. Communication system>

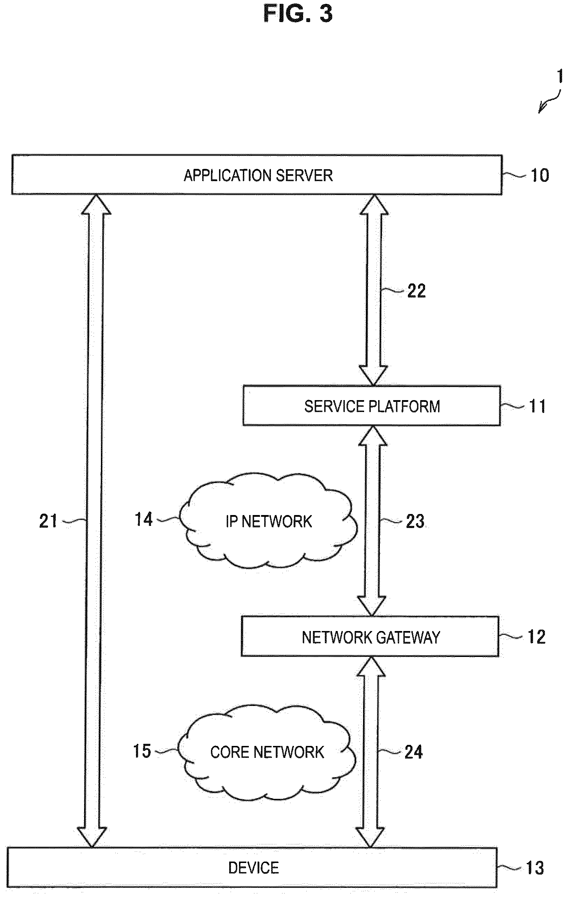

First, an overall configuration of a communication system according to the present embodiment will be described with reference to FIGS. 3 to 4.

FIG. 3 is a diagram for describing an example of a configuration of a communication system according to the present embodiment. As illustrated in FIG. 3, a communication system 1 includes an application server 10, a service platform 11, a network gateway 12, a device 13, an IP network 14, and a core network 15.

The application server 10 is a server that provides a service. The service platform 11 is a server that provides an environment serving as the basis of the service provided by the application server 10. The network gateway 12 is a device having a function of relaying between different networks. The device 13 is a wireless communication device. The network gateway 12 is connected to the service platform 11 via the IP network 14. Further, the device 13 is connected to the network gateway 12 via the core network 15.

The device 13 may include a terminal device, a base station, a network manager, or the like. The terminal device is, for example, a user terminal. The base station is, for example, a Node B, an eNB, or an access point. The network manager has a function of managing a network. In FIG. 3, the terminal device, the base station, and the network manager are expressed as the device 13 by the same layer, but they may belong to different layers. In a case in which they belong to different layers, it is preferable that the layer to which the base station and the network manager belong be closer to the core network 15 than the layer to which the terminal device belongs.

The terminal device belonging to the device 13 uses the service provided by the application server 10 via the network. A logical session related to the use of such a service can be regarded as communication between the terminal device and the application server 10 indicated by reference numeral 21. Meanwhile, as indicated by reference numerals 22, 23, and 24, physical sessions related to the use of such services can be regarded as communication via various devices. For example, the terminal device is connected to the application server 10 via the base station, the core network 15, the network gateway 12, the IP network 14, and the service platform 11. Further, the application server 10 may form the service platform 11 together with a plurality of other servers such as, for example, a cloud system. In this case, the service platform 11 may have a gateway function of establishing a connection with the IP network 14. Further, the service platform 11, the IP network 14, and the core network 15 may further include, as a physical device, a router, a switch, a virtualizing device of virtualizing a network such as a router or a switch, a virtualization control device of controlling virtualization, a cable, or the like.

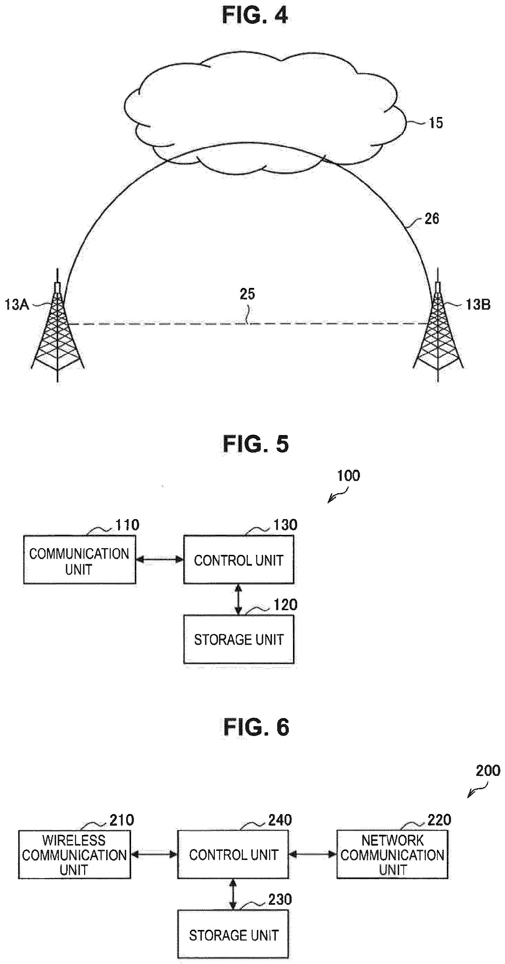

FIG. 4 is a diagram for describing a logical interface and a physical interface. As illustrated in FIG. 4, base stations 13A and 13B are connected via a logical interface 25. The interface is not necessarily physically connected. For example, as illustrated in FIG. 4, the base stations 13A and 13B may be physically connected via a physical interface 26 through a plurality of entities such as the core network 15. Further, the interfaces between the base stations indicated by reference numerals 25 and 26 are also referred to as an X2 interface. Further, the CBE 410, the CBC 430, and the MME 450 described above with reference to FIG. 1 and FIG. 2 correspond to an example of various kinds of entities (so-called logical entities).

The overall structure of the communication system 1 according to the present embodiment has been described above. Next, a basic configuration example of each of the devices included in communication system 1 will be described.

### <3.2. Communication control device>

The communication system 1 according to the present embodiment includes a communication control device that controls a communication in the communication system 1 in a coordinated manner. The communication control device can be implemented as, for example, the application server 10, the service platform 11, or a network manager 16. The communication control device may be implemented as a logical entity, and, for example, the communication control device may be formed integrally with the base station. As a more specific example, the communication control device may be implemented as the CBE 410, the CBC 430, or the MME 450 described above with reference to FIGS. 1 and 2.

FIG. 5 is a block diagram illustrating an example of a logical configuration of a communication control device 100 according to the present embodiment. As illustrated in FIG. 5, the communication control device 100 includes a communication unit 110, a storage unit 120, and a control unit 130.

### (1) Communication unit 110

The communication unit 110 is a communication interface of replaying communication between the communication control device 100 and other devices. The communication unit 110 may be a wired communication interface or a wireless communication interface. As a specific example, the communication unit 110 may perform communication with the wireless communication device of the communication system 1 which is capable of performing communication using a plurality of access schemes including at least one of a multiple access scheme using orthogonal resources and a multiple access scheme using non-orthogonal resources. Examples of the wireless communication device with which the communication unit 110 communicates include one or more terminal devices and one or more base stations belonging to the device 13.

Further, examples of the orthogonal resources include a time (a subframe, a slot, a radio frame, or the like), a frequency (a component carrier, a subcarrier, a subchannel, a resource block, or the like), and a code (a spread code, a randomized code, or the like). Further, examples of the non-orthogonal resources include a space (a spatial stream, a spatial layer, a spatial codebook, an antenna, an antenna port, or the like), power (power or the like), an interleaver (a bit interleaver, a symbol interleaver, or the like), a data rate, and a code (a sparse code, a spreading codebook, or the like). In the following description, the resources are referred to simply as resources in some cases, but other names may be used variously. For example, the resources may be referred to as radio access resources (RAR), radio resources (RR), access resources (AR), a radio access axis (RAA), a radio access component (RAC), or a radio access block (RAB).

### (2) Storage unit 120

The storage unit 120 stores programs and data for an operation of the communication control device 100 using a storage medium such as a hard disk or a semiconductor memory.

### (3) Control unit 130

The control unit 130 controls an overall operation of the communication control device 100. The control unit 130 has a function of controlling the communication in the communication system 1 in a coordinated manner.

For example, in a case in which the communication control device 100 is implemented as the CBE 410, the control unit 130 may request the CBC 430 to deliver a message such as earthquake information or a tsunami alert (that is, transmits an information delivery request). Further, at this time, the control unit 130 may limit the delivery target of the message on the basis of predetermined conditions.

Further, as another example, in a case in which the communication control device 100 is implemented as the CBC 430, the control unit 130 may generate the delivery message in response to the request from the CBE 410. Further, the control unit 130 may specify a delivery area in accordance with the delivery target of the generated delivery message and control the communication unit 110 such that the delivery request is transmitted to the MME 450 that manages the specified delivery area. Further, in a case in which the response to the delivery request is received from the MME 450, the control unit 130 transmits a response to the information delivery request to the CBE 410 which is the transmission source of the information delivery request but may control the communication unit 110 such that the response (that is, the information delivery response) is transmitted.

Further, as another example, in a case in which the communication control device 100 is implemented as the MME 450, if the delivery request is received from the CBC 430, the control unit 130 may control the communication unit 110 such that a response indicating that the message is delivered is transmitted to the CBC 430. Further, the control unit 130 may check the base station 200 located in the area serving as the delivery target of the message from among the base station 200 subordinate thereto and control the communication unit 110 such that the delivery request is transmitted to the corresponding base station 200.

### <3.3. Base station>

FIG. 6 is a block diagram illustrating an example of a logical configuration of the base station 200 according to the present embodiment. As illustrated in FIG. 6, the base station 200 includes a wireless communication unit 210, a network communication unit 220, a storage unit 230, and a control unit 240.

### (1) Wireless communication unit 210

The wireless communication unit 210 is a communication interface that mediates communication with another device by the base station 200. The wireless communication unit 210 performs wireless communication with one or more terminal devices 300 connected to the base station 200 using an access scheme such as a multiple access scheme using orthogonal resources or a multiple access scheme using non-orthogonal resources. For example, the wireless communication unit 210 performs wireless communication with the terminal device 300 using a connection setting allocated by the communication control device 100.

### (2) Network communication unit 220

The network communication unit 220 is a communication interface for connecting the base station 200 to the core network 15. The network communication unit 220 may be a wired communication interface or a wireless communication interface. The network communication unit 220 performs transmission and reception of data traffic and exchange of control messages with various control nodes in the core network 15. The network communication unit 220 can communicate with another base station 200 or the communication control device 100 in the communication system 1.

### (3) Storage unit 230

The storage unit 230 stores programs and data for an operation of the base station 200 using a storage medium such as a hard disk or a semiconductor memory.

### (4) Control unit 240

The control unit 240 controls an overall operation of the base station 200. The control unit 240 according to the present embodiment has a function of controlling the wireless communication unit 210 such that the wireless communication unit 210 performs wireless communication using resources allocated for the access scheme used by the wireless communication unit 210. For example, the control unit 240 sets the wireless communication unit 210 to use the access scheme allocated by the communication control device 100. Further, the control unit 240 sets the wireless communication unit 210 to perform wireless communication using a space region, a power region, an interleaver region, a data rate region, or a sparse code region allocated by the communication control device 100 for the access scheme used by the wireless communication unit 210.

The control unit 240 may receive the message delivery request from the MME 450 and control the wireless communication unit 210 such that the message is delivered to the target terminal device 300. At this time, the control unit 240 may transmit, for example, the paging signal to the terminal device 300 to give a notification indicating that the message is delivered on the basis of the provisions of the ETWS or the like to the terminal device 300 and then deliver the message to the terminal device 300 as the report information. Further, the control unit 240 may limit the message delivery area (in other words, a sector or a cell). Further, in a case in which the message is transmitted to the terminal device 300, the control unit 240 may control the wireless communication unit 210 such that the response is transmitted in response to the message delivery request from the MME 450.

Further, the control unit 240 may control the wireless communication unit 210 such that the terminal device 300 allocates resources for redelivering the message to another terminal device 300, and a notification of information related to the allocated resources is given to the terminal device 300. In this case, for example, the control unit 240 may control the wireless communication unit 210 such that the information related to the resources is broadcast to the respective terminal devices 300 located in the delivery area (for example, the cell). Further, as another example, the control unit 240 may receive a request for allocation of resources from the terminal device 300 and may control the wireless communication unit 210 such that a notification of information related to the allocated resources is given to the terminal device 300. Further, the details will be described later.

### <3.4. Terminal device>

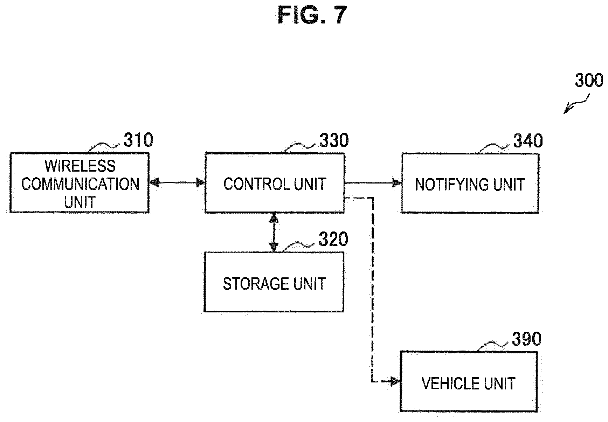

FIG. 7 is a block diagram illustrating an example of a logical configuration of the terminal device 300 according to the present embodiment. As illustrated in FIG. 7, the terminal device 300 has a wireless communication unit 310, a storage unit 320, and a control unit 330. Further, the terminal device 300 may include a notifying unit 340. Further, the terminal device 300 may include a vehicle unit 390.

### (1) Wireless communication unit 310

The wireless communication unit 310 is a wireless communication interface that relays the wireless communication between the terminal device 300 and other devices. The wireless communication unit 310 according to the present embodiment performs wireless communication using one or more of at least one of a multiple access scheme using orthogonal resources or a multiple access scheme using non-orthogonal resources. For example, the wireless communication unit 310 performs wireless communication with the base station 200 using the connection setting allocated by the communication control device 100.

### (2) Storage unit 320

The storage unit 320 stores programs and data for an operation of the terminal device 300 using a storage medium such as a hard disk or a semiconductor memory.

### (3) Notifying unit 340

The notifying unit 340 reports information to the user using an output device such as a display, a speaker, a vibration device, or the like. For example, the notifying unit 340 may report the report information corresponding to content of the message delivered from the base station 200 to the user.

### (4) Vehicle unit 390

The vehicle unit 390 schematically indicates various kinds of configurations (for example, a drive system and the like) and functions (for example, a security lock and the like) of a vehicle device such as an automobile or a train. An operation of the vehicle unit 390 may be directly or indirectly controlled by, for example, the control unit 330 to be described later. As a more specific example, there is an example of automatic driving of an automobile. In this case, for example, the vehicle unit 390 may control the configurations and functions of the drive system (for example, the accelerator and the brake) on the basis of instructions from the control unit 330.

Further, the terminal device 300 including the vehicle unit 390 may correspond to a vehicle device such as a so-called automobile or train having a communication function with the base station 200. Further, the vehicle unit 390 may be installed outside the terminal device 300. In this case, the terminal device 300 may correspond to a so-called in-vehicle device installed in the vehicle device.

### (5) Control unit 330

The control unit 330 controls an overall operation of the terminal device 300. The control unit 330 according to the present embodiment has a function of controlling the wireless communication unit 310 such that the wireless communication unit 310 performs wireless communication using resources allocated for the access scheme used by the wireless communication unit 310. For example, the control unit 330 sets the wireless communication unit 310 to use the access scheme allocated by the base station 200. Further, the control unit 330 sets the wireless communication unit 310 to perform wireless communication using a space region, a power region, an interleaver region, a data rate region, or a sparse code region allocated by the base station 200 for the access scheme used by the wireless communication unit 310.

In a case in which the message is delivered from the base station 200, the control unit 330 may cause the notifying unit 340 to report the report information corresponding to content of the message. Further, the control unit 330 may directly or indirectly control an operation of the vehicle unit 390 in accordance with the content of the message delivered from the base station 200.

Further, in a case in which the message is delivered from the base station 200, the control unit 330 may control the operation of the wireless communication unit 310 such that the message is redelivered to another terminal device 300 located in the communication area. At this time, the control unit 330 may control the operation of the wireless communication unit 310 such that the message is redelivered to the other terminal device 300 using the resources allocated by the base station 200. In this case, for example, the control unit 330 may control the operation of the wireless communication unit 310 such that a request for allocation of resources for redelivering the message to another terminal device 300 is transmitted to the base station 200 and acquire the information related to the allocated resources as a response. Further, as another example, the control unit 330 may acquire information related to resources for redelivering the message to another terminal device 300 as information (for example, system information) broadcast from the base station 200. Further, as another example, the control unit 330 may use resources decided in advance in accordance with a standard or the like for the redelivery of the message to another terminal device 300. Further, this process will be separately described later in detail.

The basic configuration example of each of the devices included in the communication system 1 has been described above with reference to FIGS. 3 to 7.

### <<4. Technical features>>

Next, technical features according to one embodiment of the present disclosure will be described.

In so-called cellular systems in which various standards are under review by 3GPP or the like, support for so-called communication between terminal devices (hereinafter also referred to collectively as "D2D") called device-to-device (D2D) or proximity service (ProSe) in addition to communication between a base station and a terminal device according to a related art has been studied.

In the communication system 1 according to the present embodiment, the terminal device 300 which has received the message such as the emergency information from the base station 200 redelivers the received message to another terminal device 300 by using D2D. Accordingly, in the communication system 1 according to the present embodiment, it is possible to deliver the message such as the emergency information to another terminal device 300 located outside the communication area of the base station 200 in addition to the terminal devices 300 located in the communication area of the base station 200. The communication system 1 according to the present embodiment will be described below in further detail.

### <4.1. Example of sequence related to redelivery of message>

First, an example of a sequence in a case in which the terminal device 300 redelivers the message delivered from the base station 200 to another terminal device 300 in the communication system 1 according to one embodiment of the present disclosure will be described.

### (1) Case in which radio resources are designated in advance by base station

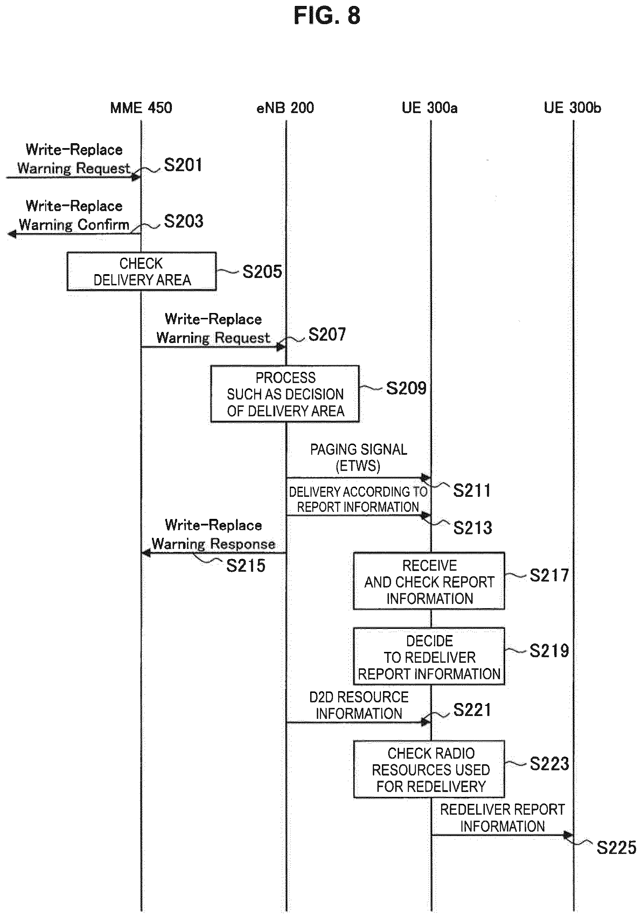

First, an example in which the terminal device 300 redelivers the message delivered from the base station 200 to another terminal device 300 using radio resources designated in advance by the base station 200 will be described with reference to FIG. 8. FIG. 8 is a sequence diagram illustrating an example of a process flow related to the redelivery of the message. Further, this description will proceed focusing on a case in which the message is delivered from the base station 200 to a terminal device 300a, and the terminal device 300a redelivers the message to another terminal device 300b. Further, in the example illustrated in FIG. 8, a process flow of communication between entities higher than the base station 200 is similar to that of the example described above with reference to FIG. 2, and thus illustration thereof is omitted. Further, in FIG. 8, since processes indicated by reference numerals S201 to S215 are substantially similar to the processes indicated by reference numerals S109, S111, and S115 to S125 in the example illustrated in FIG. 2, detailed description thereof is omitted.

Upon receiving the message from the base station 200 as the report information, the terminal device 300a checks content of the message (S217), and in a case in which the message includes information of a predetermined type (for example, the emergency information of the ETWS, the CMAS, or the like), the message is decided to be redelivered (S219).

Further, in a case in which the message delivered as the report information includes information of a predetermined type, the base station 200 notifies the terminal device 300a of information indicating radio resources (radio resources for D2D) used when the terminal device 300a redelivers the message to another terminal device 300 (for example, the terminal device 300b) (S221). Further, examples of the radio resources for the redelivery include a physical channel for D2D such as a physical sidelink discovery channel (PSDCH), a physical sidelink control channel (PSCCH), a physical sidelink shared channel (PSSCH) and a resource pool for D2D such as a radio resource pool.

Further, as long as the terminal device 300a can recognize the radio resources for the redelivery before the delivered message is redelivered to the terminal device 300b, a timing at which the base station 200 notifies the terminal device 300a of the information indicating the radio resources is not particularly limited. As a specific example, the terminal device 300a may notify the terminal device 300a of the information indicating the radio resources for the redelivery as a part of so-called system information.

Further, as another example, when the terminal device 300a delivers the message to the terminal device 300a as the report information, the terminal device 300a may notify of the information indicating the radio resources for the redelivery together with the message. In this case, the base station 200 may notify the terminal device 300a of the information indicating the radio resources for the redelivery, for example, using downlink control information (DCI).

Then, the terminal device 300a checks the radio resources notified of by the base station 200 (for example, the physical channel for D2D) (S223), and redelivers the message delivered from the base station as the report information to another terminal device 300b using the radio resources (S225).

The example in which the terminal device 300 redelivers the message delivered from the base station 200 to another terminal device 300 using the radio resources designated in advance by the base station 200 has been described above with reference to FIG. 8.

### (2) Case in which terminal device requests base station to allocate radio resources

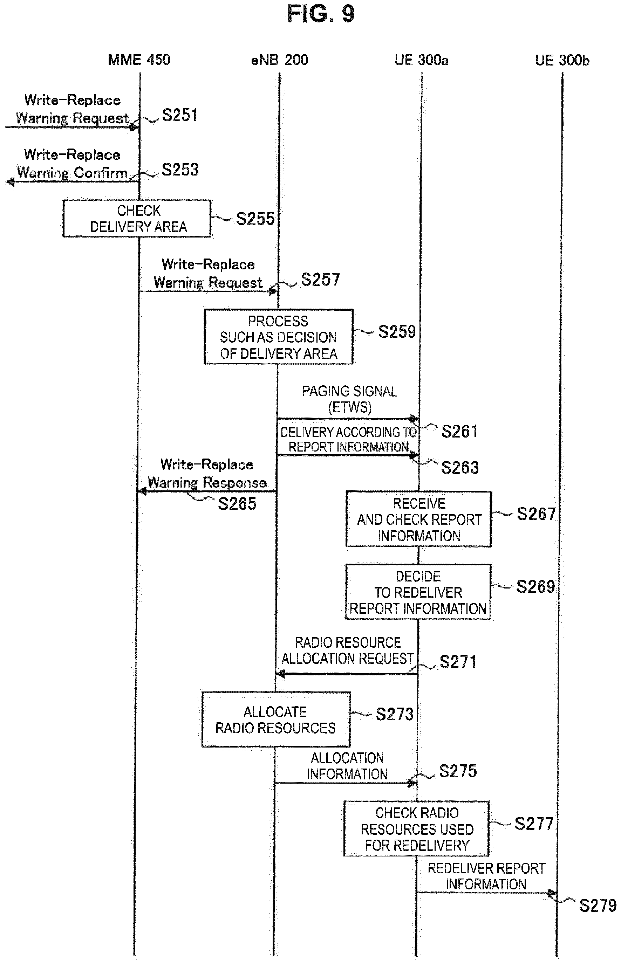

Next, an example in which the terminal device 300 requests the base station 200 to allocate radio resources to be used for redelivering the message delivered from the base station 200 to another terminal device 300 will be described with reference to FIG. 9. FIG. 9 is a sequence diagram illustrating another example of the process flow related to the redelivery of the message. Further, this description will proceed with an example in which the message is delivered from the base station 200 to the terminal device 300a, and the terminal device 300a redelivers the message to another terminal device 300b, similarly to the example illustrated in FIG. 8. Further, in the example illustrated in FIG. 9, a process flow of communication between entities higher than the base station 200 is similar to that of the example described above with reference to FIG. 2, similarly to the example illustrated in FIG. 8, and thus illustration thereof is omitted. Further, in FIG. 9, since processes indicated by reference numerals S251 to S265 are substantially similar to the processes indicated by reference numerals S109, S111, and S115 to S125 in the example illustrated in FIG. 2, detailed description thereof is omitted.

Upon receiving the message from the base station 200 as the report information, the terminal device 300a checks content of the message (S267), and in a case in which the message includes information of a predetermined type (for example, the emergency information of the ETWS, the CMAS, or the like), the message is decided to be redelivered (S269). The above process is similar to the example described above with reference to FIG. 8.

Then, the terminal device 300a requests the base station 200 which is the delivery source of the report information to allocate the radio resources for redelivering the message delivered as the report information to another terminal device 300 (S271). In response to the request from the terminal device 300a, the base station 200 allocates the radio resources used when the terminal device 300a redelivers the message to another terminal device 300 (S273). Further, the base station 200 notifies the terminal device 300a of information indicating the radio resources allocated to the terminal device 300a (that is, allocation information) (S277).

Then, the terminal device 300a checks the radio resources allocated from the base station 200 (S277), and redelivers the message delivered as the report information from the base station to another terminal device 300b using the radio resources (S279).

The example of requesting the base station 200 to allocate the radio resources used when the terminal device 300 redelivers the message delivered from the base station 200 to another terminal device 300 has been described with reference to FIG. 9.

With the above configuration, according to the communication system 1 of the present embodiment, for example, it is possible to cause the message such as the emergency information delivered from the base station 200 to reach the terminal device 300b located outside the communication area of the base station 200. Therefore, in the communication system 1 according to the present embodiment, it is possible to deliver the message to more terminal devices 300 which are located in a wider range as compared with the case of delivering the message only to the terminal device 300 located in the communication area of the base station 200.

### <4.2. Redelivery of message by terminal device>

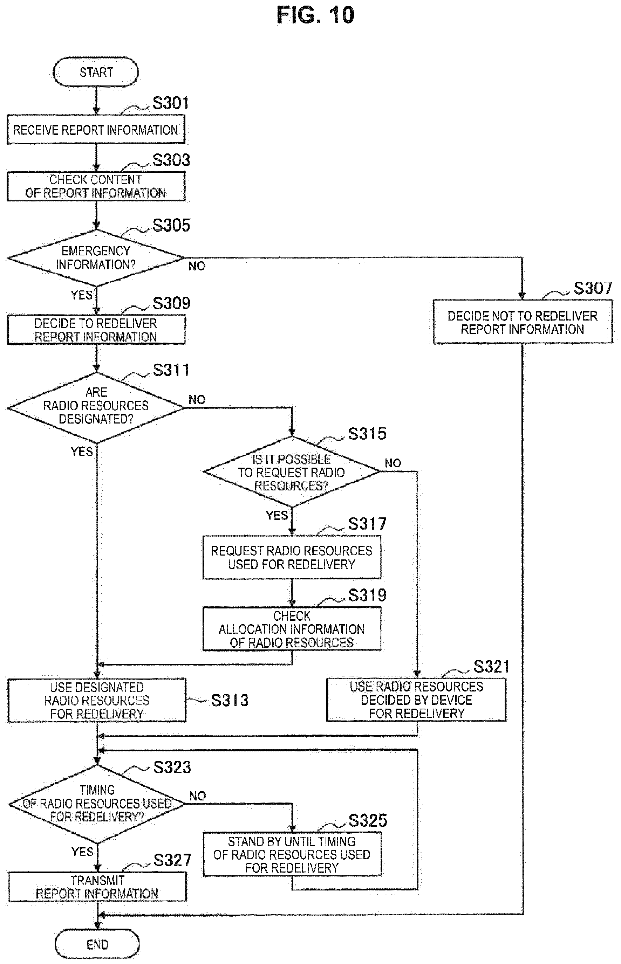

Next, an example of a flow of a series of processes in a case in which the terminal device 300 delivers the message delivered from the base station 200 to another terminal device 300 will be described. For example, FIG. 10 is a flowchart illustrating an example of a flow of a series of processes related to the redelivery of the message by terminal device 300. Further, in this description, the terminal device 300a is assumed to receive the delivery of the message from the base station 200, and in a case in which the delivered message is the emergency information (for example, the CBE, the ETWS, the CMAS, or the like), the message is assumed to be redelivered to another terminal device 300b.

As illustrated in FIG. 10, if the report information is received from the base station 200 (S301), the terminal device 300a checks content of the message delivered as the report information (S303). Further, in a case in which the message delivered as the report information is not the emergency information (NO in S305), the terminal device 300a decides not to redeliver the report information (that is, the delivered message), and ends a series of processes (S307).

Further, in a case in which the message delivered as the report information is the emergency information (YES in S305), the terminal device 300a decides to redeliver the report information (S309). If the delivered report information is decided to be redelivered, the terminal device 300a checks the radio resources to be used for redelivering the report information. For example, in a case in which the radio resources for the redelivery are designated in advance by the system information or the like (YES in S311), the terminal device 300a uses the radio resources for the redelivery of the report information (S313).

On the other hand, in a case in which the radio resources for the redelivery are not designated (NO in S311), the terminal device 300a may switch a subsequent process in accordance with whether or not it is possible to request the base station 200 to allocate the radio resources (for example, whether or not it is located in the cell of the base station 200 (in the communication area)).

Specifically, in a case in which it is possible to request the base station 200 to allocate the radio resources (YES in S315), the terminal device 300a requests the base station 200 to allocate the radio resources used for the redelivery of the report information (S317). In response to the request, the base station 200 allocates the radio resources for the redelivery to the terminal device 300a, and notifies the terminal device 300a of information indicating the radio resources (that is, the allocation information). Further, the terminal device 300a checks the information indicating the radio resources for the redelivery notified of by the base station 200 (S319) and uses the radio resources for the redelivery of the report information (S313).

On the other hand, in a case in which it is difficult to request the base station 200 to allocate the radio resources (NO in S315), the terminal device 300a decides the radio resources for the redelivery by itself and uses the radio resources for the delivery of the report information (S321). Further, in this case, the terminal device 300a preferably uses, for example, radio resources which are decided in advance on the basis of rules or the like for the redelivery of the report information delivered from the base station 200.

Then, in a case in which a timing corresponding to the radio resources used for the redelivery has not arrived (NO in S323), the terminal device 300a stands by until the timing corresponding to the radio resources arrives (S325). Further, in a case in which the timing corresponding to the radio resources used for the redelivery has arrived (YES in S323), the terminal device 300a redelivers the report information delivered from the base station 200 to another terminal device 300b using the radio resources used for the redelivery (S327). Accordingly, it is also possible to deliver the report information (that is, the message) delivered from the base station 200 to, for example, the terminal device 300b located outside the communication area of the base station 200 via the terminal device 300a.

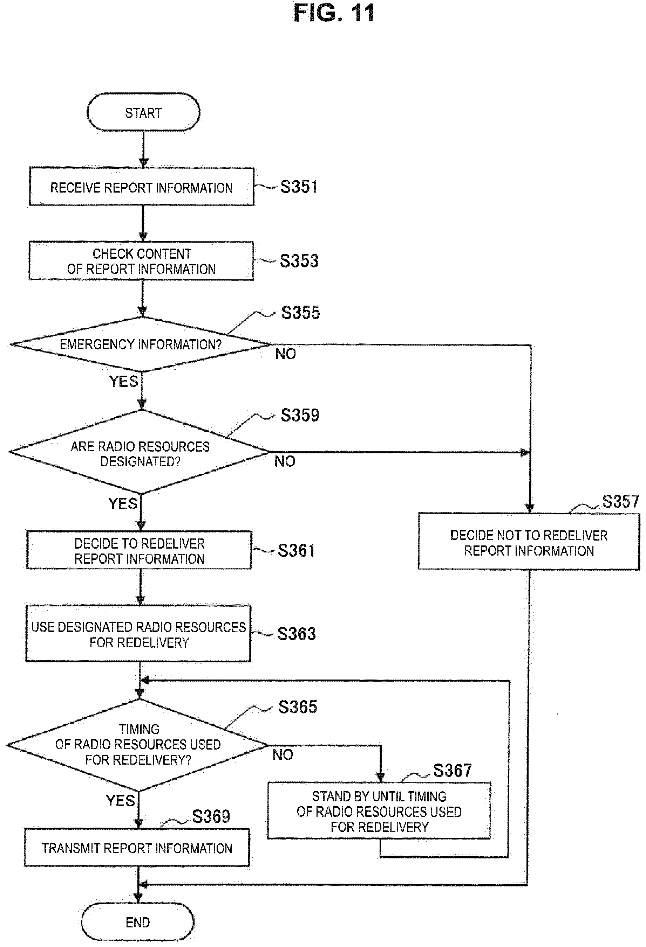

Further, in the example described with reference to FIG. 10, even in a case in which the radio resources for the redelivery is not designated in advance, the terminal device 300a decides the radio resources for the redelivery and redelivers the report information. On the other hand, in a case in which the radio resources for the redelivery are not designated in advance, the terminal device 300a may operate not to redeliver the report information. For example, FIG. 11 is a flowchart illustrating another example of a flow of a series of processes related to the redelivery of the message by the terminal device 300 and illustrates an example of an operation in a case in which the radio resources for the redelivery are not designated, and the terminal device 300 does not deliver the report information. Further, in the example illustrated in FIG. 11, processes indicated by reference numerals S351 to S357 are substantially similar to the processes indicated by reference numerals S301 to S307 in FIG. 10, and thus detailed description thereof will be omitted.

In FIG. 11, in a case in which the message delivered as the report information is the emergency information (YES in S355), the terminal device 300a checks whether or not the radio resources for the redelivery of the report information is designated in advance. In a case in which the radio resources for the redelivery is not designated (NO in S359), the terminal device 300a decides not to redeliver the report information (that is, the delivered message) and ends a series of processes (S357).

Further, in a case in which the radio resources for the redelivery is designated (YES in S359), the terminal device 300a decides to redeliver the report information (S361) and uses the designated radio resources for the redelivery of the report information (S363).

Then, in a case in which the timing corresponding to the radio resources used for the redelivery does not come (NO in S365), the terminal device 300a is on standby until the timing corresponding to the radio resources comes (S367). Further, in a case in which the timing corresponding to the radio resources to be used for the redelivery comes (S365, YES), the terminal device 300a redelivers the report information delivered from the base station 200 to another terminal device 300b using the radio resources used for the redelivery (S369).

The example of the flow of a series of processes in a case in which the terminal device 300 delivers the message delivered from the base station 200 to another terminal device 300 has been described above with reference to FIGS. 10 and 11.

### <4.3. Control example of transmission and reception of information between nodes>

Next, an example of control related to transmission and reception of information such as a message between nodes such as between the base station and the terminal device, between the terminal devices, or the like will be described.

### (1) Example of setting related to transmission and reception of information between nodes

First, an example of a setting related to transmission and reception of information between nodes will be described. For example, Table 4 below shows examples of physical channels used for transmission and reception of information between the respective nodes in a case in which the terminal device 300 which has received the delivery of the message from the base station 200 delivers the message to another terminal device 300. A case in which the radio resources are allocated in advance as in the example illustrated in FIG. 8 and a case in which the radio resources are allocated in accordance with a request from the terminal device as in the example illustrated in FIG. 9 are shown in Table 4 below.

### [Table 4]

**Table 4: Examples of physical channels used for report of emergency information**

| | Transmitting node | Receiving node | Case in which radio resources are allocated in advance | Case in which radio resources are allocated in response to request |
|---|---|---|---|---|
| Delivery of report information | eNB | UE | PBCH or PDSCH | PBCH or PDSCH |
| D2D resource information | eNB | UE | PBCH or PDSCH | - |
| Radio resources allocation request | UE | eNB | - | PUCCH or PUSCH |
| Radio resources allocation information | eNB | | - | PBCH or PDSCH or PDCCH |
| Redelivery of report information | UE | UE | PSDCH or PSSCH | PSDCH or PSSCH |

Specifically, for example, in a case in which the base station 200 (eNB) delivers the message to the terminal device 300 (UE) as the report information, it is preferable to use a physical broadcast channel (PBCH) or a downlink physical shared channel (PDSCH). Further, it is more preferable to deliver the message using the PDSCH in terms of a data amount of the message data which can be transmitted as the report information.

Further, a case in which the base station 200 reserves the D2D resources (that is, the radio resources for the redelivery) regularly or irregularly (that is, in a case in which the D2D resource pool is designated) can be assumed. In this case, the base station 200 may use, for example, the PBCH or the PDSCH for notifying of information related to the designation of the D2D resources.

Further, a case in which the terminal device 300 requests the base station 200 to allocate the radio resources for redelivering the message delivered from the base station 200 can be assumed. In this case, the terminal device 300 may use, for example, a physical uplink control channel (PUCCH) or a physical uplink shared channel (PUSCH) for the request. Further, in response to the request for the allocation of the radio resources from the terminal device 300, the base station 200 notifies of the information (that is, allocation information) indicating the radio resources allocated to the terminal device 300. For example, a PBCH, a PDSCH, or a physical downlink control channel (PDCCH) may be used for this notification. Further, in a case in which the radio resources to be allocated in response to the request from the terminal device 300 are the radio resources of D2D (Sidelink), the base station 200 may notify the terminal device 300 of the information indicating the radio resources using the PBCH or the PDSCH.

Further, in a case in which the terminal device 300 redelivers the message to another terminal device 300, a physical sidelink discovery channel (PSDCH) or a physical sidelink shared channel (PSSCH) may be used. Particularly, in a case in which the message serving as the delivery target is the emergency information, the delivery efficiency can be further improved using the PSDCH for the redelivery of the message. Further, as described above, the radio resources (for example, the PSDCH, the PSSCH, a physical sidelink control channel (PSCCH), or the like) used for the redelivery of the message may be a D2D resource pool designated in advance from the base station 200. Further, the PSDCH is likely to reach more terminal devices 300 among the D2D resources. Therefore, it is more preferable to use the PSDCH for the redelivery of the message such as the emergency information.

As described above, in a case in which the terminal device 300 which has received the delivery of the message redelivers the message to another terminal device 300, the terminal device 300 may use other radio resources different from the radio resources used for receiving the message. Further, the above-described example is merely an example and not necessarily limited to the example described above. As a specific example, the terminal device 300 which has received the delivery of the message may use other radio resources in which at least any one of frequency resources (a subcarrier, a resource block, a component carrier, a frequency channel, or the like) and time resources (a symbol, a slot, a subframe, a radio frame, a super frame, or the like) are different from the radio resources used for receiving the message as radio resources for redelivering the message.

Further, as long as the terminal device 300 which has received the delivery of the message can redeliver the message to another terminal device 300 located in its own communication range of the terminal device 300, a method thereof is not particularly limited. As a specific example, the terminal device 300 may redelivery (that is, unicast) the message to another terminal device 300 located in its own communication range as a destination. Further, as another example, the terminal device 300 may redeliver the message by broadcasting (in other words, reporting) the message to another terminal device 300 located in its own communication range.

Further, as the reception method and transmission method of the report information (that is, the message), a different method can be used in accordance with each target channel (radio resources). Particularly, in the cellular system such as the communication system 1 according to the present embodiment, the base station 200 and the terminal device 300 differ in a signal processing capacity, allowable power consumption, or the like. Therefore, it is possible to optimize frequency use efficiency and power efficiency by selecting the reception method and the transmission method in accordance with performance or characteristics of each node.

For example, Table 5 below shows examples of combinations of the transmission method and the reception method for a downlink channel, an uplink channel, and a side link (D2D) channel.

### [Table 5]

**Table 5: examples of combinations of transmission and reception methods of each channel**

| | Downlink channel | Uplink channel | Sidelink (D2D) channel |
|---|---|---|---|
| Transmitting node | eNB | UE | UE |
| Receiving node | UE | eNB | UE |
| Method of transmission and reception | OFDMA | SC-FDMA | SC-FDMA |

As shown in Table 5, in transmission of information using the downlink channel, that is, from the base station 200 (eNB) to the terminal device 300 (UE), orthogonal frequency-division multiple access (OFDMA) is used as a method of transmission and reception (that is, a communication scheme). On the other hand, in transmission of information using the uplink channel, that is, from the terminal device 300 to the base station 200, single carrier-frequency division multiple access (SC-FDMA) is used as is used as a method of transmission and reception. This is because since it is preferable that the terminal device 300 be lower in a transmission signal Peak-to-Average Power Ratio (PAPR) from a viewpoint of power consumption, a single carrier modulation (for example, SC-FDMA) is sclcctcd. The same applies to transmission of information using the side link (D2D) channel, that is, from the terminal device 300 to another terminal device 300 (for example, the redelivery of the message).

### (2) Operation of terminal device

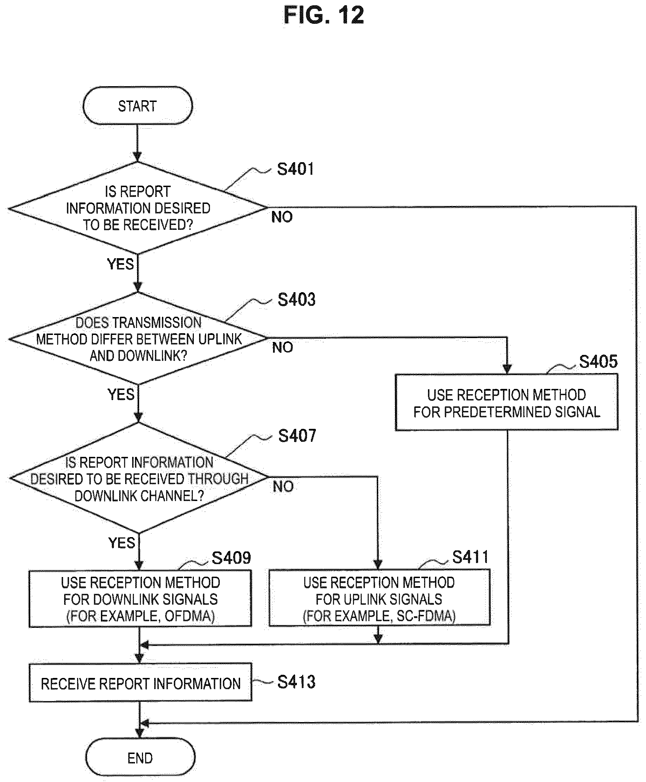

Next, an example of a process related to reception and transmission of the report information by the terminal device 300 will be described focusing on a process related to switching between the reception method and the transmission method. First, an example of a process in a case in which the terminal device 300 receives the message as the report information from the base station 200 or another terminal device 300 will be described with reference to FIG. 12. FIG. 12 is a flowchart illustrating an example of a flow of a process related to reception of the message by the terminal device 300.

As illustrated in FIG. 12, in a case in which the terminal device 300 desires to receive the report information (that is, the message) (YES in S401), the terminal device 300 switches the reception method for the report information depending on whether or not the information transmission method differs between the uplink and the downlink.

For example, in a case in which the information transmission method differs between the uplink and the downlink (YES in S403), the terminal device 300 switches the reception method for the report information depending on whether or not the report information is desired to be received through the downlink channel. In other words, in a case in which the report information is desired to be received through the downlink channel (YES in S407), the terminal device 300 uses a reception method for downlink signals such as OFDMA (S409). Further, in a case in which the report information is desired to be received through a channel other than the downlink channel (NO in S407), the terminal device 300 uses the reception method for uplink signals such as SC-FDMA (S411).

On the other hand, in a case in which the information transmission method does not differ between the uplink and the downlink (NO in S403), the terminal device 300 may use a reception method for a predetermined signal (S405).

Further, the terminal device 300 receives the report information on the basis of the decided reception method (S413). Further, it will be appreciated that the terminal device 300 does not execute a series of a process related to the reception of the report information described above unless the terminal device 300 desires to receive the report information (NO in S401).

The example of the process in a case in which the terminal device 300 receives the message from the base station 200 or another terminal device 300 as the report information has been described above with reference to FIG. 12.

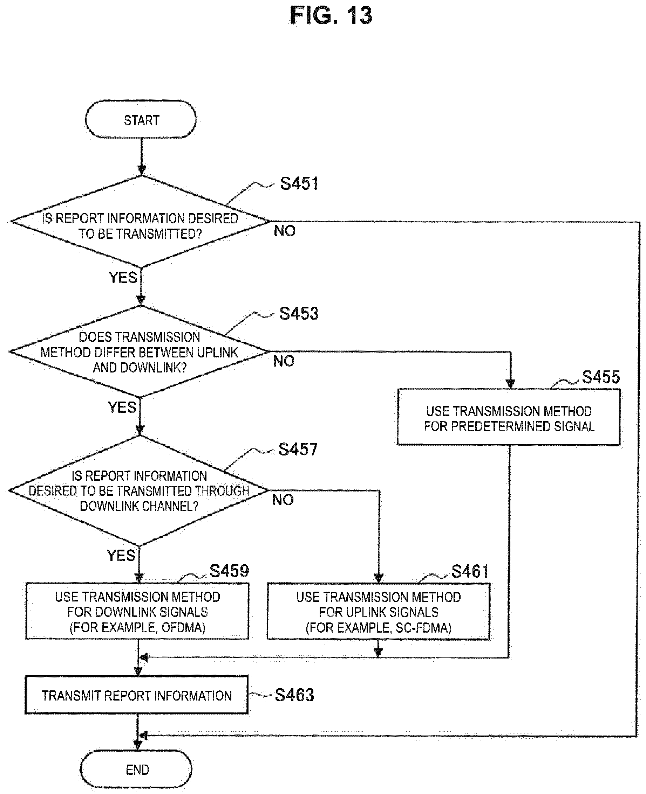

Next, an example of a process in a case in which the terminal device 300 transmits the message as the report information to another terminal device 300 will be described with reference to FIG. 13. FIG. 13 is a flowchart illustrating an example of a flow of a process related to transmission of the message by the terminal device 300.

As illustrated in FIG. 13, in a case in which the terminal device 300 desires to transmit the report information (that is, the message) (YES in S451), the terminal device 300 switches the transmission method for the report information depending on whether or not the information transmission method differs between the uplink and the downlink.

For example, in a case in which the information transmission method differs between the uplink and the downlink (YES in S453), the terminal device 300 switches the transmission method for the report information depending on whether or not the report information is desired to be transmitted through the downlink channel. In other words, in a case in which the report information is desired to be transmitted through the downlink channel (YES in S457), the terminal device 300 uses a transmission method for downlink signals such as OFDMA (S459). Further, in a case in which the report information is transmitted through a channel other than the downlink channel (NO in S457), the terminal device 300 uses a transmission method for uplink signals such as SC-FDMA (S461).

On the other hand, in a case in which the information transmission method does not differ between the uplink and the downlink (NO in S403), the terminal device 300 may use a transmission method for a predetermined signal (S405).

Further, the terminal device 300 transmits the report information to another terminal device 300 on the basis of the decided transmission method (S463). Further, it will be appreciated that the terminal device 300 does not execute a series of a process related to the transmission of the report information described above unless the terminal device 300 desires to transmit the report information (NO in S451).

The example of the process in the case in which the terminal device 300 transmits the message to another terminal device 300 as the report information has been described above with reference to FIG. 13.

### (3) Functional configuration of terminal device related to reception and transmission of information

Next, examples of functional configurations of the terminal device 300 according to the reception method and the transmission method will be described, particularly, focusing on a configuration related to reception and transmission of information.

### (3-1) Reception of information based on OFDMA

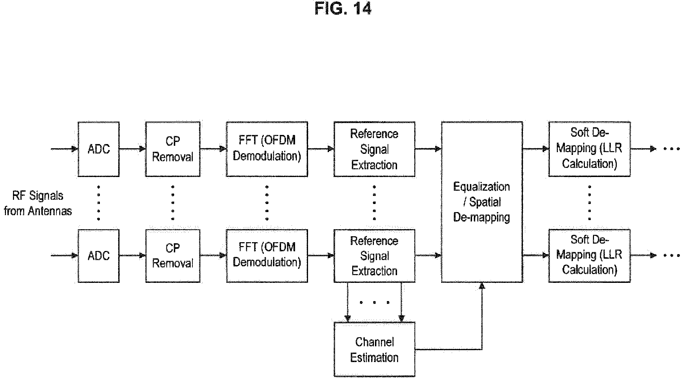

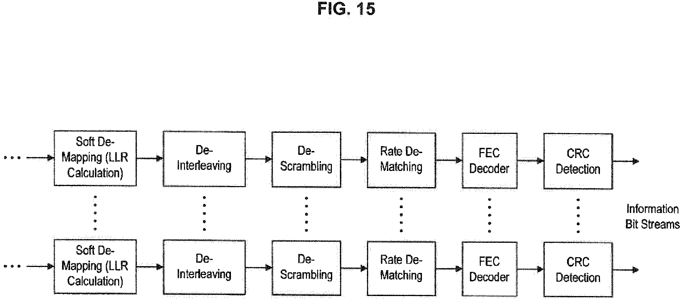

First, an example of a functional configuration of the terminal device 300 focused on reception of information based on OFMDA, for example, in a case in which the terminal device 300 receives information from the base station 200 will be described with reference to FIG. 14 and FIG. 15. FIGS. 14 and 15 are block diagrams illustrating an example of a functional configuration related to reception of information by the terminal device 300 and illustrates an example focused on reception of information based on OFDMA.

First, as illustrated in FIG. 14, an analog radio frequency (RF) signal received by each antenna element undergoes frequency transform and analog to digital conversion, and then a cyclic prefix (CP) added to the converted reception signal is removed. Then, the reception signal from which the CP is removed (that is, a symbol sequence of each antenna element) undergoes OFDM demodulation as fast Fourier transform (FFT) is performed (that is, a plurality of subcarrier signals are extracted from the multicarrier signal).

Further, an equalization process and space layer demapping are then applied to the reception signal which has undergone the OFDM demodulation. As a specific example, a reference signal added to the reception signal is extracted, and the equalization processing is performed on the reception signal in accordance with a characteristic of a channel estimated on the basis of the reference signal. Accordingly, a bit sequence of each layer is output. Further, the demapping process is performed on the bit sequence of each layer.

Then, as illustrated in FIG. 15, processes such as de-interleaving, descrambling, rate matching, forward error correction (FEC) decoding, and cyclic redundancy check (CRC) decoding are performed on each bit sequence which has undergone the demapping process. Accordingly, the bit sequence of each layer is demodulated.

The example of the functional configuration of the terminal device 300 focused on reception of information based on OFMDA, for example, in a case in which the terminal device 300 receives information from the base station 200 has been described above with reference to FIGS. 14 and 15.

### (3-2) Transmission of information based on SC-FDMA

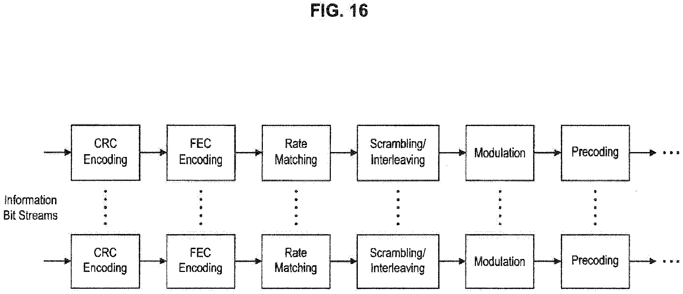

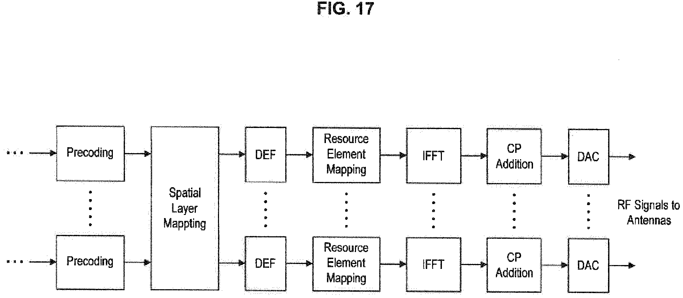

Next, an example of a functional configuration of the terminal device 300 focused on transmission of information based on SC-FMDA, for example, in a case in which the terminal device 300 transmits information to another terminal device 300 will be described with reference to FIGS. 16 and 17. FIGS. 16 and 17 are block diagrams illustrating an example of a functional configuration related to transmission of information by the terminal device 300 and illustrates an example of a case focused on transmission of information based on SC-FDMA.

First, as illustrated in FIG. 16, for example, CRC encoding, FEC encoding, rate matching, and scrambling/interleaving are performed on each bit sequence of each layer, modulation is performed, and then precoding is performed.

Then, as illustrated in FIG. 17, the space layer mapping is performed on the bit sequence which has undergone the precoding, and thus a bit sequence of each antenna element is output. Further, discrete Fourier transform (DFT), resource element mapping, inverse fast Fourier transform (IFFT), CP insertion, and the like are performed on the bit sequence of each antenna element. Then, the symbol sequence into which the CP is inserted undergoes digital to analog conversion and frequency transform, and the resulting symbol sequence is output to each antenna element.

The example of the functional configuration of the terminal device 300 focusing on transmission of information based on the SC-FMDA, for example, in a case in which the terminal device 300 transmits information to another terminal device 300 has been described above with reference to FIGS. 16 and 17.

### (3-3) Reception of information based on SC-FDMA

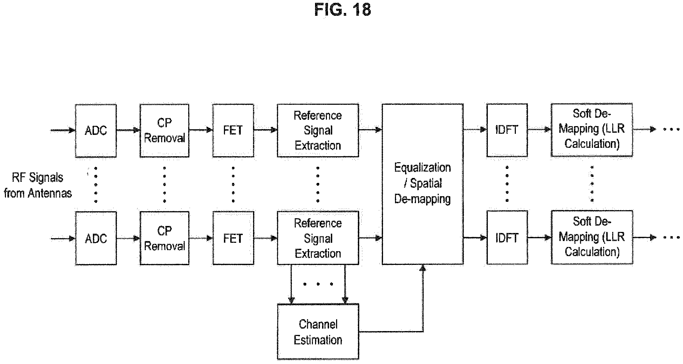

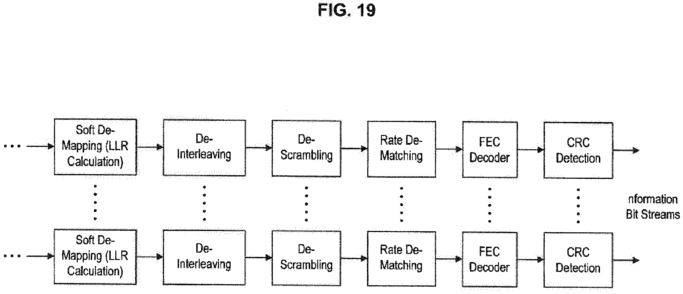

Next, an example of a functional configuration of the terminal device 300 focusing on reception of information based on SC-FMDA, for example, in a case in which the terminal device 300 receives information from another terminal device 300 will be described with reference to FIGS. 18 and 19. FIG. 18 and FIG. 19 are block diagrams illustrating an example of a functional configuration related to reception of information by the terminal device 300 and illustrates an example of a case focused on reception of information based on SC-FDMA.

First, as illustrated in FIG. 18, an analog radio frequency (RF) signal received by each antenna element undergoes frequency transform and analog to digital conversion, and then a cyclic prefix (CP) added to the converted reception signal is removed. Then, the reception signal from which the CP is removed (that is, the symbol sequence of each antenna element) undergoes fast Fourier transform (FFT), and thus the reference signal is extracted, and the equalization process and the space layer demapping are performed on the basis of the reference signal. Accordingly, the bit sequence of each layer is output. Then, the IDFT and the demapping processes are performed on the bit sequence of each layer.

Then, as illustrated in FIG. 19, processes such as de-interleaving, descrambling, rate matching, FEC decoding, and CRC decoding are performed on each bit sequence which has undergone the demapping process, and thus the bit sequence of each layer is demodulated.

The example of the functional configuration of the terminal device 300 focused on the reception of information based on SC-FMDA, for example, in a case in which the terminal device 300 receives information from another terminal device 300 has been described with reference to FIGS. 18 and 19.

### <4.4. Multihop of report information between terminal devices>

Next, an example of a mechanism of further increasing a range in which the report information reaches by causing the report information (that is, the message) to hop between the terminal devices 300 twice or more (that is, multihop) will be described. Further, in order to facilitate understanding of characteristic parts, this description will proceed focusing on an example in which the message delivered from the base station 200 is redelivered from the terminal device 300a to the terminal device 300b, and the terminal device 300b further redelivers the message to the terminal device 300c.

### (1) Example of sequence

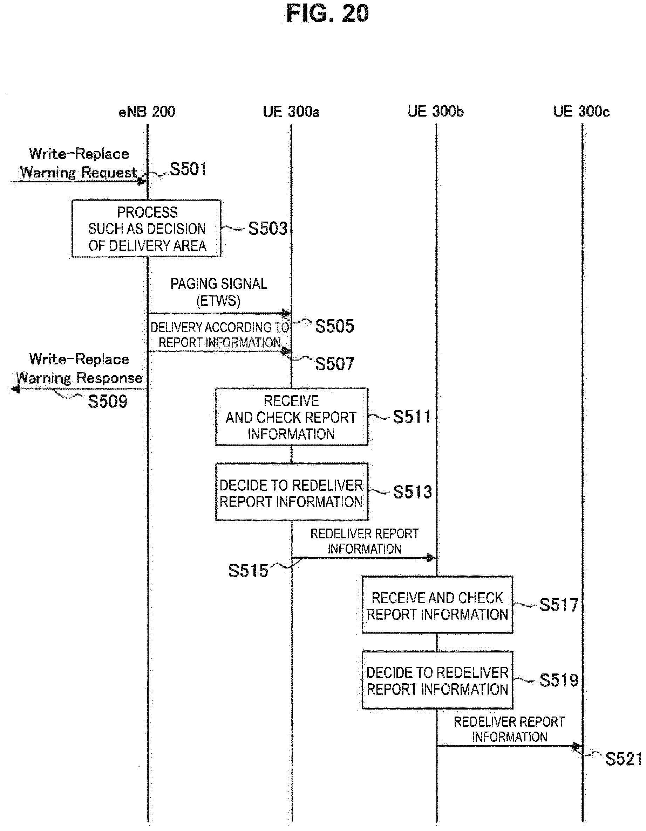

First, an example of a sequence in which the report information delivered from the base station 200 is caused to multihop between the terminal devices 300 will be described with reference to FIG. 20. FIG. 20 is a sequence diagram illustrating an example of a process flow in a case in which the report information delivered from the base station 200 is caused to multihop between the terminal devices 300. Further, in the example illustrated in FIG. 20, the process flow of communication between the entities higher than the base station 200 is similar to that of the example described above with reference to FIG. 8, and thus illustration thereof is omitted. Further, in FIG. 20, since the processes indicated by reference numerals S501 to S515 are substantially similar to the processes indicated by reference numerals S207 to S215 and S225 in the example illustrated in FIG. 8, detailed description thereof is omitted, and the description will proceed focusing on the operation of the terminal device 300b.

Upon receiving the message redelivered as the report information from the terminal device 300a, the terminal device 300b checks content of the message (S517). Further, in a case in which the received message is information of a predetermined type (for example, the emergency information of the ETWS, the CMAS, or the like), the terminal device 300b decides to redeliver the message (S519).

Then, the terminal device 300b redelivers the message redelivered as the report information from the terminal device 300a to another terminal device 300c (S521), for example, using predetermined radio resources.

The example of the sequence in which the report information delivered from the base station 200 is caused to multihop between the terminal devices 300 has been described above with reference to FIG. 20.

### (2) Limitation of number of hops

Next, an example of a mechanism of limiting the number of multihops of the report information between terminal devices 300 (that is, the number of hops) will be described.

When the report information is caused to multihop between the terminal devices 300, it is possible to deliver the report information in a wider range, but on the other hand, if the multihop is excessively performed, the radio resources may be excessively consumed. Therefore, a mechanism of limiting the number of multihops of the report information between the terminal devices 300 may be provided. For example, Table 6 below shows an example of information elements (IE) of the report information including information for limiting the number of hops.

### [Table 6]

**Table 6: Example of Information Elements of report information including number of hops delivered**

| ***Information Elements of report information*** |
|---|
| ***messageIdentifier*** |
| ***serialNumber*** |
| ***dummy*** |
| ***warningType*** |
| ***DistributionHopCount* (number of deliveries of report information (number of hops))** |

For example, the IE of the report information shown in Table 6 is one in which information (DistributionHopCount) indicating the number of hops is added to a format of the Primary Notification message of the ETWS shown in Table 1. DistributionHopCount is increased each time the report information is delivered.

For example, in the case of the example illustrated in FIG. 20, in the report information delivered from the base station 200 to the terminal device 300a, DistributionHopCount is set to "1." Then, in a case in which the terminal device 300a redelivers the report information delivered from the base station 200 to the terminal device 300b, the DistributionHopCount of the report information to be redelivered is incremented. In other words, in the report information redelivered from the terminal device 300a to the terminal device 300b, DistributionHopCount is set to "2." Similarly, for the report information redelivered from the terminal device 300b to the terminal device 300c, DistributionHopCount is set to "3."

With such a configuration, the terminal device 300 which has received the report information can recognize the number of hops related to the delivery of the report information with reference to DistributionHopCount of the report information. Accordingly, for example, in a case in which the number of hops of the report information is greater than or equal to a threshold value, the terminal device 300 which has received the report information may decide not to redeliver the report information in order to prevent the excessive multihop.

As described above, an example of a mechanism of limiting the number of multihops of the report information between the terminal devices 300 (that is, the number of hops) has been described.

### (3) Operation of terminal device

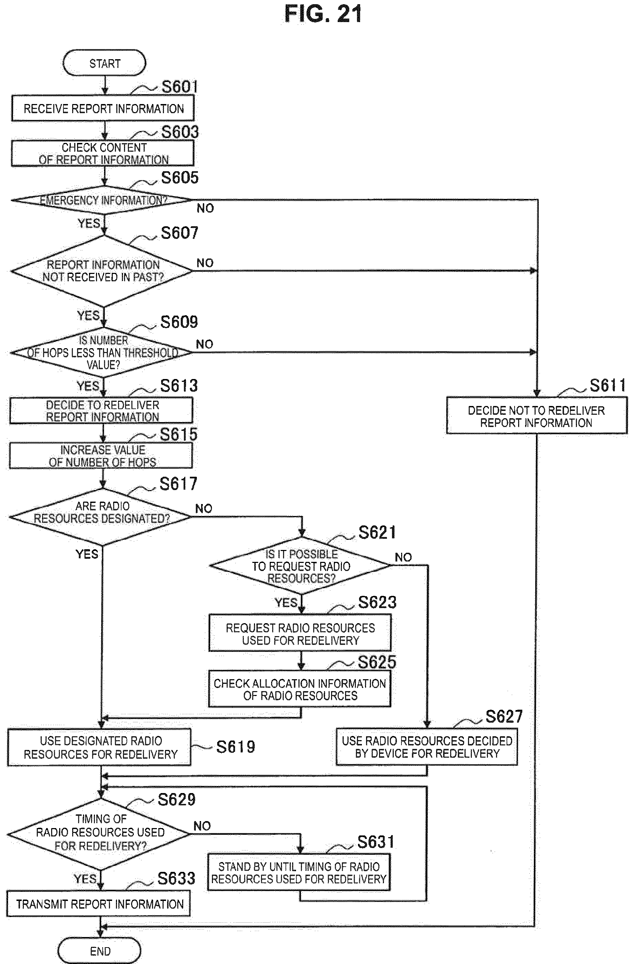

Next, an example of a flow of a series of processes of the terminal device 300 in a case in which the report information is caused to multihop between the terminal devices 300 will be described. Further, in order to facilitate understanding of characteristic parts, this description will proceed focusing on the operation of the terminal device 300b in the example illustrated in FIG. 20. For example, FIG. 21 is a flowchart illustrating an example of a flow of a series of processes of the terminal device 300 in a case in which the report information is caused to multihop between the terminal devices 300 and illustrates an example in which control related to multihop is added to the example illustrated in FIG. 10. In this regard, in the example illustrated in FIG. 21, this description will proceed focusing on parts different from the example illustrated in FIG. 10, and detailed description of parts substantially similar to the example illustrated in FIG. 10 will be omitted.

As illustrated in FIG. 21, if the report information is received from the terminal device 300a (S601), the terminal device 300b checks content of the message delivered as the report information (S603). Further, in a case in which the message delivered as the report information is not the emergency information (NO in S605), the terminal device 300b decides not to redeliver the report information (that is, the delivered message) and ends a series of processes (S611). The same process is similar to that of the example described above with reference to FIG. 10.

Further, in a case in which the message delivered as the report information is the emergency information (YES in S605), the terminal device 300b switches a subsequent process depending on whether or not the content of the message is content received in the past. Specifically, in a case in which the content of the message delivered as the report information is content received in the past (NO in S607), the terminal device 300b decides not to redeliver the report information (that is, the delivered message) and ends a series of processes (S611). This is because, in a case in which the content of the message delivered as the report information is content that the terminal device 300b has received in the past, another terminal device 300 to which the terminal device 300b is to redeliver the report information is likely to have similarly received it in the past. In other words, with such control, it is possible to prevent the occurrence of a situation in which the report information excessively multihops. Further, a period in which it is determined whether or not the content has been received in the past may be appropriately set in accordance with the operation of the communication system 1. As a specific example, the terminal device 300b may decide whether or not the content of the message is content received in the past by going back a predetermined period from the present.

Further, in a case in which the content of the message delivered as the report information is not content received in the past (YES in S607), the terminal device 300b may switch the subsequent process in accordance with whether or not the number of hops related to the delivery of the report information is less than a threshold value. Specifically, in a case in which the number of hops is equal to or greater than the threshold value (NO in S609), the terminal device 300b may decide not to redeliver the report information (that is, the delivered message) and end a series of processes (S611). With such control, it is possible to prevent the occurrence of a situation that the report information excessively multihops. Further, for example, the number of hops can be recognized on the basis of the value set in DistributionHopCount in the report information as described with reference to Table 6.

Further, in a case in which the number of hops is less than the threshold value (YES in S609), the terminal device 300b decides to redeliver the report information (S613). In this case, the terminal device 300b increases the number of hops of the report information (for example, the value set in DistributionHopCount) (S615).

Further, the subsequent process is similar to that of the example illustrated in FIG. 10. In other words, the terminal device 300b preferably redelivers it to another terminal device 300 (for example, the terminal device 300c) using the radio resources for the redelivery.

Further, the example described above with reference to FIG. 21 is merely an example and is not necessarily limited to the example described above.

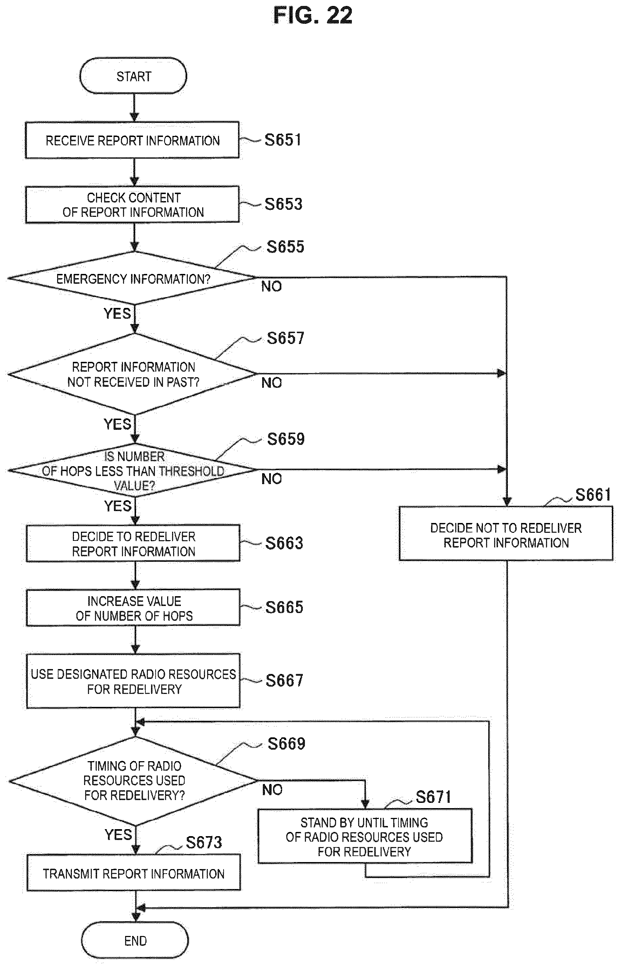

As a specific example, the terminal device 300b may operate not to redeliver the report information in a case in which the radio resources for the redelivery is not designated in advance as in the example illustrated in FIG. 11. For example, FIG. 22 is a flowchart illustrating another example of a flow of a series of processes of the terminal device 300 in a case in which the report information is caused to multihop between the terminal devices 300 and illustrates an example in which control related to multihop is added to the example illustrated in FIG. 11.

Further, in the example illustrated in FIG. 22, the processes indicated by reference numerals S651 to S665 are substantially similar to the processes indicated by reference numerals S601 to 615 in the example illustrated in FIG. 21. Further, the processes indicated by reference numerals S667 to S673 are substantially similar to the processes indicated by reference numerals S363 to S369 in the example illustrated in FIG. 11. Therefore, detailed description of the example illustrated in FIG. 22 will be omitted.

The example of the flow of a series of processes of the terminal device 300 in the case in which the report information is caused to multihop between the terminal devices 300 has been described above with reference to FIGS. 21 and 22.

### <4.5. Redelivery using different communication systems>

Next, an example in which the terminal device 300 redelivers the message to another terminal device 300 using another communication system different from a system in which the report information is received (for example, a system (cellular system) subordinate to the base station 200) will be described. Further, in order to facilitate understanding of characteristic parts, this description will proceed focusing on an example in which the message is delivered from the base station 200 to the terminal device 300a, and the terminal device 300 redelivers the message to another terminal device 300 via another communication system different from a cellular system.

### (1) Example of sequence

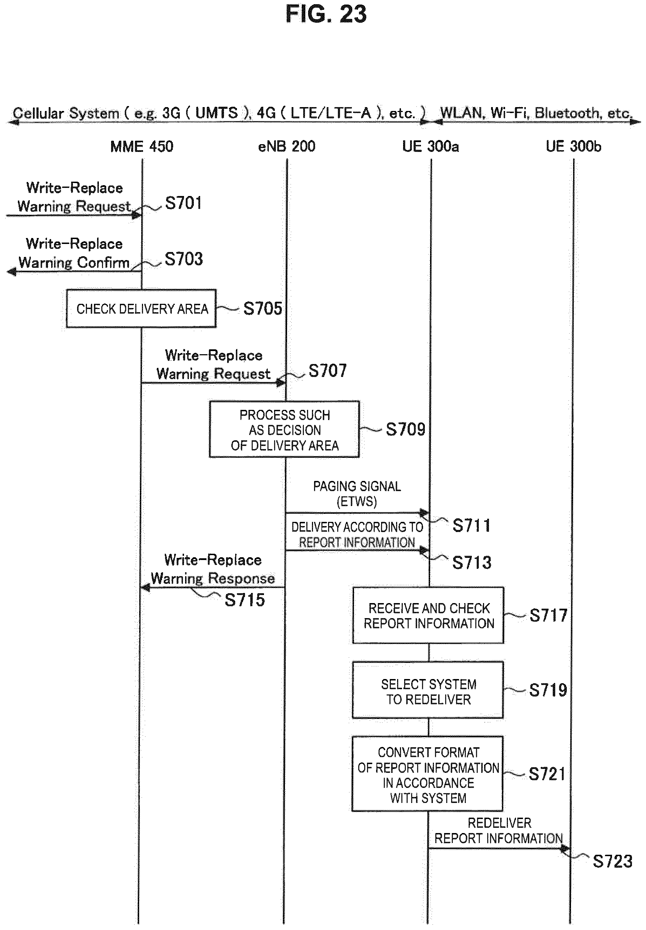

First, an example of a sequence in a case in which the terminal device 300 redelivers the report information to another terminal device 300 using a different communication system from a system in which the report information is received will be described with reference to FIG. 23. FIG. 23 is a sequence diagram illustrating an example of a process flow in a case in which the terminal device 300 redelivers the report information to another terminal device 300 using a different communication system from a system in which the report information is received. In the example illustrated in FIG. 23, the terminal device 300a redelivers the message received from the base station 200 to the terminal device 300b connected via a communication system different from the cellular system such as a wireless local area network (LAN) (WLAN), Wi-Fi (a registered trademark), or Bluetooth (a registered trademark). Further, in the example illustrated in FIG. 23, a process flow of communication between the entities higher than the base station 200 is similar to that of the example described with reference to FIG. 8, and illustration thereof is omitted. Further, in FIG. 23, since processes indicated by reference numerals S701 to S715 are substantially similar to the processes indicated by reference numerals S207 to S215 in the example illustrated in FIG. 8, detailed description will be omitted, and the description will proceed focusing on the operation of the terminal device 300a.

Upon receiving the message delivered as the report information from the base station 200, the terminal device 300a checks the content of the message (S717). Then, in a case in which the received message includes information of a predetermined type (for example, the emergency information of the ETWS, the CMAS or the like), the terminal device 300a decides to redeliver the message (S719).

Then, the terminal device 300a converts a protocol format of the report information delivered from the base station 200 (for example, the IE or the like) in accordance with the communication system serving as the redelivery target (S721). Further, an example of a method of converting the protocol format of the report information will be separately described later.

Then, the terminal device 300a redelivers the message delivered as the report information from the base station 200 via communication established with the terminal device 300b (that is, communication based on another communication system different from the cellular system) (S723).

The example of the sequence in the case in which the terminal device 300 redelivers the report information to another terminal device 300 using a different communication system from a system in which the report information is received has been described above with reference to FIG. 23.

### (2) Operation of terminal device

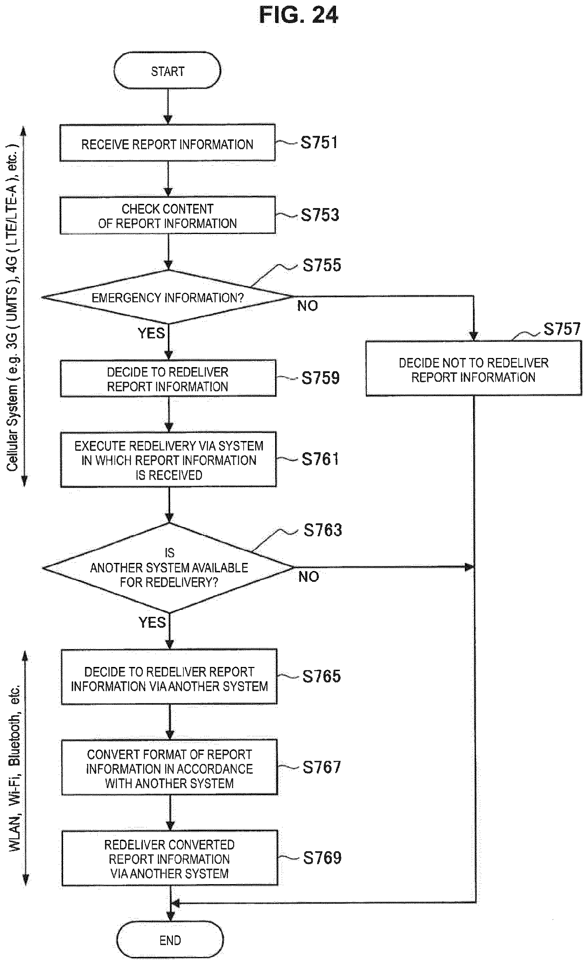

Next, an example of a flow of a series of processes of the terminal device 300 in the case in which the terminal device 300 redelivers the report information to another terminal device 300 using a different communication system from a system in which the report information is received will be described. Further, in order to facilitate understanding of characteristic parts, this description will proceed focusing on the operation of the terminal device 300a in the example illustrated in FIG. 23. For example, FIG. 24 is a flowchart illustrating an example of a flow of a series of processes of the terminal device 300 in the case in which the terminal device 300 redelivers the report information to another terminal device 300 using a different communication system from a system in which the report information is received.

As illustrated in FIG. 24, if the report information is received from the base station 200 (S751), the terminal device 300a checks the content of the message delivered as the report information (S753). Further, in a case in which the message delivered as the report information is not the emergency information (NO in S755), the terminal device 300a decides not to redeliver the report information (that is, the delivered message) and ends a series of processes (S757).

Further, in a case in which the message delivered as the report information is the emergency information (YES in S755), the terminal device 300a decides to redeliver the report information (S759). Then, the terminal device 300a redelivers the report information delivered from the base station 200 to another terminal device 300 by using the system in which the report information is received (that is, the system (cellular system) subordinate to the base station 200) (S761).

Then, the terminal device 300a checks whether or not another system different from the system in which the report information is received is available for the redelivery of the report information (that is, the message). Further, in a case in which there is no other system available for the redelivery of the report information (NO in S763), the terminal device 300a does not redeliver the report information via another system and ends a series of processes.

On the other hand, in a case in which another system different from the system in which the report information is received is available for the redelivery of the report information (that is, the message) (YES in S763), the terminal device 300a decides to redeliver the report information using another system (S765). In this case, the terminal device 300a converts the protocol format of the report information (for example, the IE, or the like) in accordance with another system to be used to redeliver the report information (S767). Then, the terminal device 300a redelivers the report information whose protocol format is converted to another terminal device 300 (for example, the terminal device 300b illustrated in FIG. 23) using another system (S769).

Further, in FIG. 24, the processes indicated by reference numerals S751 to S761 are executed, for example, as processes within the system (that is, the cellular system) subordinate to the base station 200. Further, the processes indicated by reference numerals S765 to S769 are executed as processes within a communication system different from the cellular system such as WLAN, Wi-Fi (a registered trademark), Bluetooth (a registered trademark), or the like.

The example of the flow of a series of processes of the terminal device 300 in the case in which the terminal device 300 redelivers the report information to another terminal device 300 using a different communication system from the system in which the report information is received has been described above with reference to FIG. 24.

### (3) Conversion example of protocol format of report information

Next, a conversion example of the protocol format of the report information in the case in which the terminal device 300 redelivers the report information to another terminal device 300 using a different communication system from the system in which the report information is received will be described. Further, this description will proceed with examples in which the received report information is each of the ETWS and the CMAS will be described.

For example, Table 7 below illustrates a conversion example of the protocol format of the report information in a case in which the Primary Notification message of the ETWS described as Table 1 is received as the report information.

### [Table 7]

**Table 7: Conversion example of protocol format (example of Primary Notification message of ETWS (TS36.331, SystemInformationBlockType10)**

| **SystemInformationBlockType10 field descriptions** | |
|---|---|
| **messageIdentifie** | **→ delete** |
| **serialNumber** | **→ delete** |
| **dummy** | **→ delete** |
| **warningType** | **→ redeliver** |

In the example shown in Table 7, for example, the terminal device 300a extracts information of "warningType" among the IEs of the Primary Notification message of the ETWS received as the report information as the redelivery target, and deletes other IEs (that is, "messageldentifie," "serialNumber," and "dummy"). Further, the terminal device 300a generates new report information on the basis of the extracted "warningType" information in accordance with the communication system used for the redelivery of the report information to another terminal device 300b. Accordingly, the protocol format of the report information delivered from the base station 200 to the terminal device 300a is converted in accordance with another communication system in which the terminal device 300a redelivers the report information to the terminal device 300b.

Similarly, Table 8 below shows a conversion example of the protocol format of the report information in a case in which the Primary Notification message of the ETWS shown as Table 2 is received as the report information.

### [Table 8]

**Table 8: Conversion example of protocol format (example of Secondary Notification message of ETWS (TS36.331, SystemInformationBlockType11)**

| **SystemInformationBlockType11 field descriptions** | |
|---|---|
| **dataCodingScheme** | **→ delete** |
| **messageIdentifier** | **→ delete** |
| **serialNumber** | **→ delete** |
| **warningMessageSegment** | **→ redelivery** |
| **warningMessageSegmentNumber** | **→ delete** |
| **warningMessageSegmentType** | **→ delete** |

In the example shown in Table 8, for example, the terminal device 300a extracts information of "warningMessageSegment" among the IEs of the Primary Notification message of the ETWS received as the report information as the redelivery target, and deletes other IEs (that is, "dataCodingScheme," "messageldentifier," "serialNumber," "warningMessageSegmentNumber," and "warningMessageSegmentType"). Then, the terminal device 300a preferably generate new report information on the basis of the extracted "warningMessageSegment" information in accordance with the communication system used for the redelivery of the report information to another terminal device 300b.

Further, table 9 below shows a conversion example of the protocol format of the report information in a case in which the Notification message of the CMAS described above as Table 3 is received as the report information.

### [Table 9]

**Table 9: Conversion example of protocol format (example of Notification message of CMAS (TS36.331, SystemInformationBlockType12)**

| **SystemInformationBlockType12 field descriptions** | |
|---|---|
| **dataCodingScheme** | **→ delete** |
| **messageIdentifier** | **→ delete** |
| **serialNumber** | **→ delete** |
| **warningMessageSegment** | **→ redelivery** |
| **warningMessageSegmentNumber** | **→ delete** |
| **warningMessageSegmentType** | **→ delete** |

In the example shown in Table 9, for example, the terminal device 300a extracts information of "warningMessageSegment" among the IEs of the Primary Notification message of the ETWS received as the report information as the redelivery target, and deletes other IEs (that is, "dataCodingScheme," "messageldentifier," "serialNumber," "warningMessageSegmentNumber," and "warningMessageSegmentType"). Then, the terminal device 300a preferably generates new report information on the basis of the extracted "warningMessageSegment" information in accordance with the communication system used for the redelivery of the report information to another terminal device 300b.

The conversion example of the protocol format of the report information in the case in which the terminal device 300 redelivers the report information to another terminal device 300 using a different communication system from the system in which the report information is received has been described above.

### <4.6. Operation of terminal device receiving delivery of message>

Next, an example in which the terminal device 300 which has received delivery (or redelivery) of a message of a predetermined type such as the emergency information or the like from the base station 200 or another terminal device 300 performs predetermined operation control in accordance with the content of the message will be described.

### (1) Example of sequence

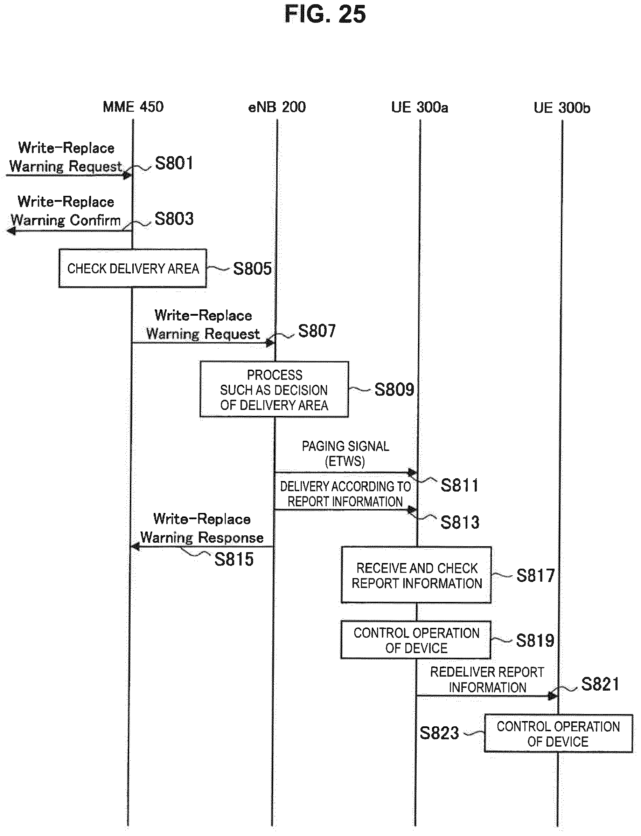

First, an example of a sequence of executing predetermined operation control in accordance with the content of the message in a case in which the terminal device 300 receives a message of a predetermined type such as the emergency information or the like will be described with reference to FIG. 25. FIG. 25 is a sequence diagram illustrating an example of a process flow of executing predetermined operation control in accordance with the content of the message in a case in which the terminal device 300 receives a message of a predetermined type such as the emergency information or the like. Further, in the example illustrated in FIG. 25, a process flow of communication between the entities higher than the base station 200 is similar to that the example described with reference to FIG. 8, and thus illustration thereof is omitted. Further, in FIG. 25, since processes indicated by reference numerals S801 to S815 are substantially similar to the processes indicated by reference numerals S207 to S215 in the example illustrated in FIG. 8, detailed description thereof will be omitted, and the description will proceed focusing on the operation of the terminal devices 300a and 300b.

Upon receiving the message delivered as the report information from the base station 200, the terminal device 300a checks the content of the message (S817). Further, in a case in which the received message is a predetermined type of information (for example, the emergency information of the ETWS, the CMAS, or the like), the terminal device 300a performs predetermined operation control in accordance with the content of the message (S819). As a specific example, in a case in which the terminal device 300a receives the emergency information related to a predetermined event such as a disaster or an accident, the terminal device 300a may present information related to the event on the map information presented by a navigation device or the like. Further, as another example, the terminal device 300a may control an operation of a vehicle associated with the terminal device 300a (for example, the vehicle unit 390). Further, the predetermined operation control performed in accordance with the content of the message by the terminal device 300 will be described later in detail.

Further, similarly to the example described above, the terminal device 300a may redeliver the report information delivered from the base station 200 to another terminal device 300b (S821).

Similarly, the terminal device 300b which has received the redelivery of the report information (that is, the message) from the terminal device 300a may perform predetermined operation control in accordance with the content of the message, similarly to the terminal device 300a (S823).

The example of the sequence of executing predetermined operation control in accordance with the content of the message in a case in which the terminal device 300 receives a message of a predetermined type such as the emergency information or the like has been described above with reference to FIG. 25.

### (2) Process flow of operation control

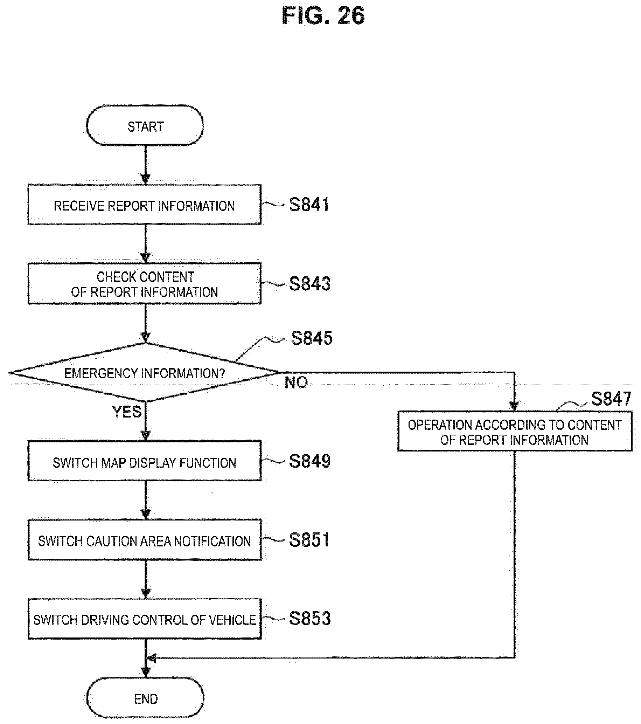

Next, an example of a flow of a series of processes of operation control according to the content of the emergency information by the terminal device 300 which has received the delivery of the emergency information will be described with reference to FIG. 26. FIG. 26 is a flowchart illustrating an example of a flow of a series of processes of operation control according to the content of the emergency information by the terminal device 300.

As illustrated in FIG. 26, if the report information is received from the base station 200 (S841), the terminal device 300 checks the content of the message delivered as the report information (S843).

In a case in which the message delivered as the report information is the emergency information (YES in S845), the terminal device 300 executes various kinds of operation controls in accordance with the content of the emergency information. As a specific example, the terminal device 300 may switch an operation of a map display function to the operation for displaying the emergency information (S849). Further, the terminal device 300 may perform a notification or the like for drawing attention to the user in accordance with whether or not the terminal device 300 is located within the caution area corresponding to the event notified of as the emergency information (S851). Further, the terminal device 300 may switch an operation related to driving control of a vehicle associated with the terminal device 300 to an operation at the time of emergency or the like (S853). Further, specific examples of the respective operation controls will be separately described later.

Further, even in a case in which the message delivered as the report information is not the emergency information (NO in S845), the terminal device 300 may perform the operation according to the content of the report information (S847).

The example of the flow of a series of processes of operation control according to the content of the emergency information by the terminal device 300 which has received the delivery of the emergency information has been described with reference to FIG. 26.

### (3) Presentation of information to map information

Next, an example of an operation in a case in which the terminal device 300 which has received the delivery of the emergency information presents information related to the event indicated by the emergency information on the map information displayed by the navigation device or the like will be described as an example of the operation control by the terminal device 300.

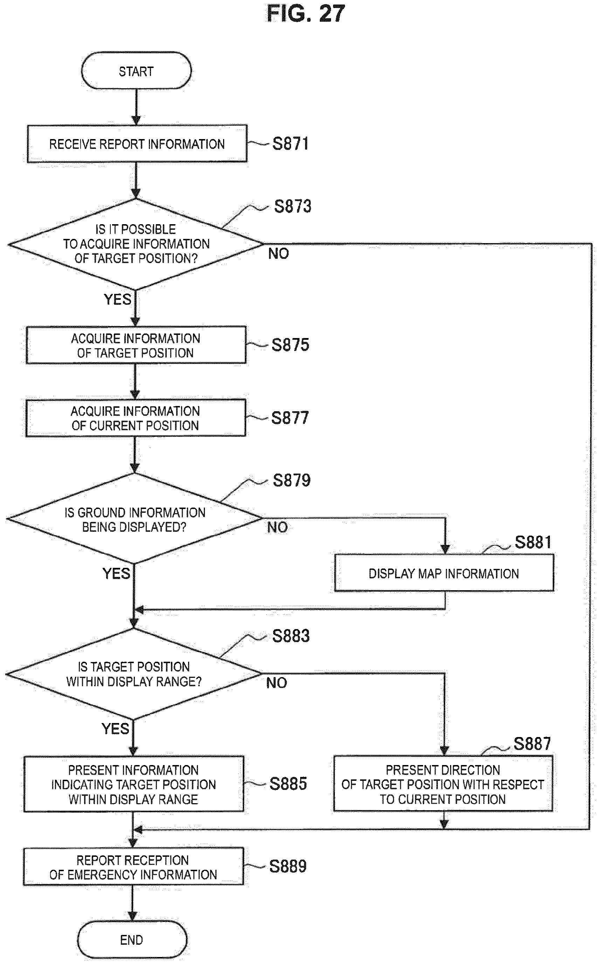

For example, FIG. 27 is a flowchart illustrating an example of a flow of a series of operations in a case in which the terminal device 300 which has received the delivery of the emergency information presents information related to the event indicated by the emergency information on the map information.

As illustrated in FIG. 26, in a case in which the terminal device 300 receives the report information related to a predetermined event such as the emergency information from the base station 200 (S871), the terminal device 300 checks whether or not it is possible to acquire information related to a position associated with the event (hereinafter also referred to as a "target position"). Further, in a case in which it is possible to acquire the information related to the target position, the terminal device 300 may present the information related to the corresponding event on the map information presented by the navigation device or the like, for example, on the basis of the information related to the target position.

Specifically, in a case in which it is possible to acquire the information of the target position (YES in S873), the terminal device 300 acquires the information of the target position (S875). Further, at this time, the terminal device 300 may acquire information related to a current position (S877). Further, in a case in which the map information is not displayed on a predetermined display unit (for example, a display unit of the navigation device or the like) (NO in S879), the terminal device 300 causes the display unit to display the map information (S881). Further, it will be appreciated that, in a case in which the map information is already displayed on a predetermined display unit (YES in S879), the map information may not be displayed again.

Then, the terminal device 300 executes various kinds of controls in accordance with whether or not the target position is within a display range of the map information (for example, within a predetermined range based on the current position).

As a specific example, in a case in which the target position is within the display range (YES in S883), the terminal device 300 may present information indicating the target position (for example, a marker or the like) at a position corresponding to the target position on the map information (S885).

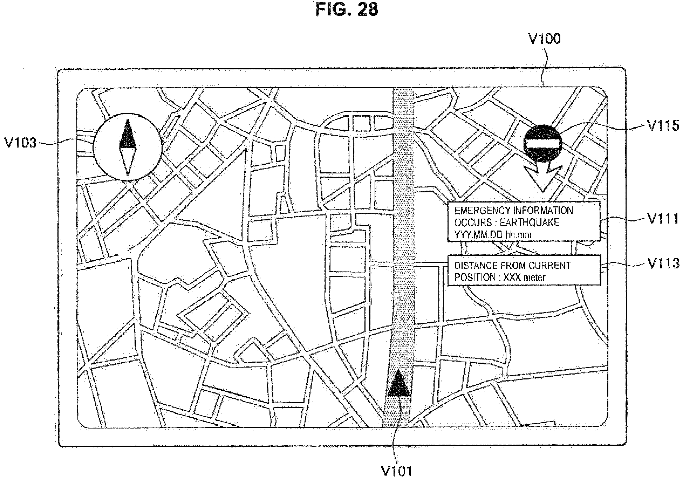

For example, FIG. 28 illustrates an example of display in a case in which content reported as the emergency information is presented on the map information. As illustrated in FIG. 28, the terminal device 300 may presents information V101 indicating the current position (that is, the position of the terminal device 300) or information V103 indicating a direction on map information VI00 displayed on the display unit or the like of the navigation device. Further, the terminal device 300 may present information V111 related to the event reported as the emergency information or information V113 related to a position at which the event occurs (for example, a distance from the current position or the like) on the map information VI00. Further, as illustrated in FIG. 28, in a case in which the target position is within the display range of the map information V100, the terminal device 300 may present information V115 indicating the position of the target position in association with the position corresponding to the target position on the map information V100.

Further, in a case in which the target position is not within the display range (NO in S883), the terminal device 300 may present information indicating the direction of the target position with respect to the current position (S887).

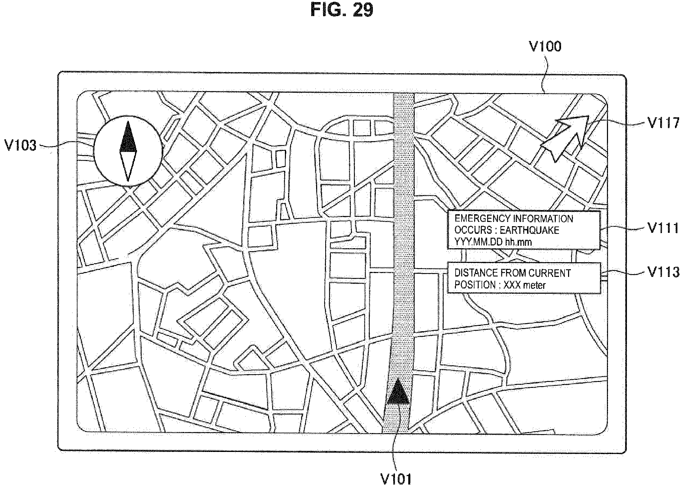

For example, FIG. 29 illustrates another example of display in a case in which content reported as the emergency information is presented on the map information. Further, in FIG. 29, information indicated by reference numerals V100 to V113 corresponds to information having reference numerals similar thereto in FIG. 28. As illustrated in FIG. 29, in a case in which the target position is not within the display range of the map information V100, the terminal device 300 may present information V117 indicating the direction of the target position with respect to the current position on the map information V100.

Further, in a case in which it is difficult to acquire the information of the target position (NO in S873), the terminal device 300 may not execute the operation related to the presentation of various kinds of information related to the event reported as the emergency information on the map information.

Further, the terminal device 300 gives a report indicating that the emergency information is received to the user, and presents information indicating the content reported as the emergency information (S889). Further, at this time, the terminal device 300 may present the information indicating the content reported as the emergency information in association with the position on the map information. Further, examples of the content reported as the emergency information include an occurrence time of the emergency information, specific content of the emergency information (for example, information related to an occurred event, or the like), a current position of the terminal device 300, and information related to a position at which a corresponding event occurs (that is, a target position).

As described above, the terminal device 300 can notify the user of the content of the report information in a more preferable form, for example, so that a positional relationship between the position in which the event occurs and the current position or the like is visually presented by presenting the content reported as the emergency information on the map information.

The example of the flow of a series of operations in a case in which the terminal device 300 which has received the delivery of the emergency information presents information related to the event indicated by the emergency information on the map information has been described above with reference to FIG. 27.

### (4) Report of information according to area determination

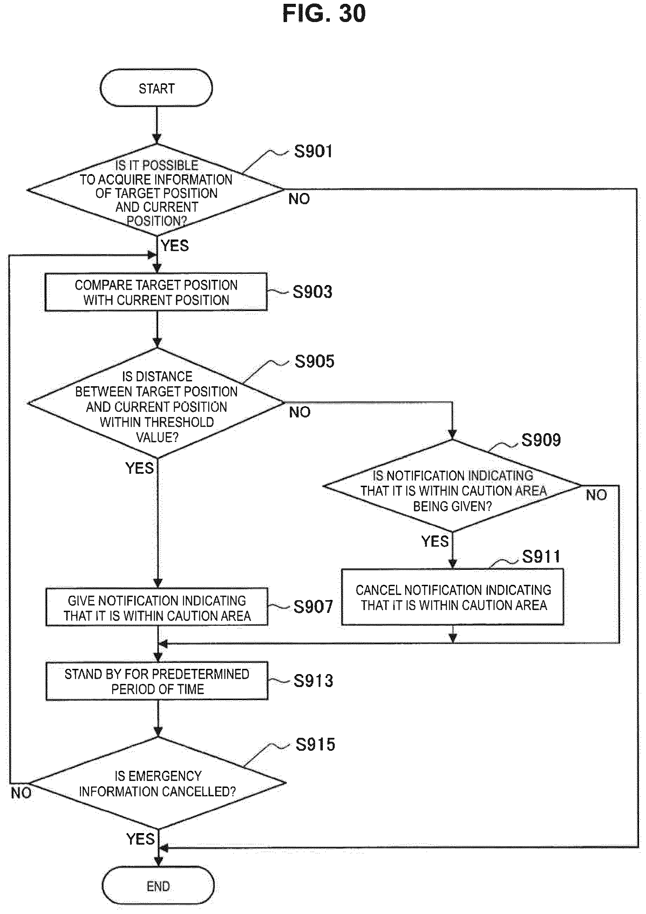

Next, an example of a process in which the terminal device 300 which has received the delivery of the emergency information determines whether or not the terminal device 300 is located within a caution area, and gives a notification of attracting attention to the user depending on the determination result will be described as an example of the operation control by the terminal device 300. For example, FIG. 30 is a flow chart illustrating an example of a flow of a series of processes in a case in which a notification is given to the user depending on whether or not the terminal device 300 is located within the caution area.

As illustrated in FIG. 30, the terminal device 300 which has received the delivery of the emergency information performs determination of whether or not the terminal device 300 is located within the caution area depending on whether or not it is possible to acquire the information of the target position and the current position and a process corresponding to the decision result.

Specifically, in a case in which it is possible to acquire the information of the target position and the current position (YES in S901), the terminal device 300 compares the target position with the current position and estimates a distance between the current position and the target position (S903). Further, in a case in which the distance between the target position and the current position is within a threshold value (YES in S905), the terminal device 300 gives a notification indicating that the terminal device 300 is located within the caution area to the user (S907). Further, a specific example of an information notification method will be separately described later.

Further, in a case in which the distance between the target position and the current position exceeds the threshold value (NO in S905), it is checked whether or not a notification indicating that the terminal device 10 is located within the cautionary area is being given, and in a case in which the notification is being given (YES in S909), the notification is canceled (S911).

Then, the terminal device 300 stands by for a predetermined period of time (S913), and in a case in which the emergency information is not cancelled (NO in S915), the terminal device 300 executes a series of processes indicated by reference numerals S903 to S913 again. Then, in a case in which the emergency information is cancelled (YES in S915), the terminal device 300 ends a series of processes.

Further, in a case in which it is difficult to acquire the information of the target position and the current position (NO in S901), the terminal device 300 may not execute a series of processes described above.

Further, in the example described above, the terminal device 300 estimates the distance from the current position on the basis of the target position (that is, the position at which the event occurs) and the current position, but instead of the target position, any other position may be used as a position serving as a reference for distance estimation depending on the event reported as the emergency information. For example, Table 10 below shows an example of a setting of a threshold value of a distance from the current position determined to be within the caution area and a position serving as the reference for distance estimation with the current position according to an event.

### [Table 10]

**Table 10: Examples of values of distances for caution area estimation**

| Notified events | distances | references |
|---|---|---|
| Incident | 500 m | Position at which incident occurs |
| Accident | 500 m | Position at which accident occurs |
| Fire | 500 m | Position at which fire occurs |
| Earthquake/tsunami | 5 km | Position of epicenter or position of coastline close to epicenter |
| eruption | 10 km | Position of erupted volcano |

As a specific example, as shown in Table 10, in a case in which the emergency information for reporting the occurrence of an event such as an incident, an accident, a fire, or the like is received, the terminal device 300 may estimate an area within 500m from the position at which the event occurs as the caution area. Further, in a case in which the emergency information for reporting the occurrence of an earthquake or a tsunami is received, the terminal device 300 may estimate an area within 5 km from a position of an epicenter or a position of a coastline close to the epicenter as the caution area. Further, in a case in which the emergency information for reporting the eruption of a volcano is received, the terminal device 300 may estimate an area within 10 km from an erupted volcano as the caution area. Of course, the above-described example is merely an example and not necessarily limited to the example described above.

The example of the process in which the terminal device 300 which has received the delivery of the emergency information determines whether or not the terminal device 300 is located within a caution area, and gives a notification of attracting attention to the user depending on the determination result has been described with reference to FIG. 30 as an example of the operation control by the terminal device 300.

### (5) Control of vehicle

Next, an example of a process in a case in which the terminal device 300 which has received the delivery of the emergency information controls an operation of a vehicle associated with the terminal device 300 will be described as an example of the operation control by the terminal device 300.

Specifically, the terminal device 300 may execute control of operations of various kinds of control targets related to the operation of the vehicle, selection of a route, or the like so that the vehicle becomes a more secure state in accordance with the event reported as the emergency information. For example, Table 11 below shows an example of a setting of control items and control content (control example) in a case in which the terminal device 300 controls the operation of the vehicle.

### [Table 11]

**Table 11: Example of vehicle control**

| Control items | Control content (control example) |
|---|---|
| Speed | Limit maximum speed |
| Engine | Limit number of revolutions |
| Navigation | Present route avoiding caution area as possible as it can |
| Automatic driving | Control stop/start of automatic driving or level of automatic driving (increase automatic items/decrease automatic items) |

As a specific example, as shown in Table 11, the terminal device 300 may control the operation related to the operation of the vehicle such as a maximum speed of the vehicle, the number of revolutions of an engine, and the like. Further, for example, the terminal device 300 may estimate the caution area in accordance with the content of the delivered emergency information, control the operation of the navigation device on the basis of an estimation result, calculate a route avoiding the caution area as possible as it can, and present the calculated route to the user. Further, in a case in which the vehicle has an automatic driving function, the terminal device 300 may control the function related to the automatic driving in accordance with the content of the delivered emergency information. Specifically, the terminal device 300 may control stop and start of the automatic driving in accordance with the content of the emergency information. Further, the terminal device 300 may control a level of the automatic driving such that items serving as an automatic driving target is increased or decreased in accordance with the content of the emergency information.

As described above, the terminal device 300 controls the operation of the device or an operation of a device for assisting the operation of the vehicle such as the navigation device or the like in accordance with an event or content reported as the emergency information, and thus it is also possible to secure the safety of the user.

The example of the process in the case in which the terminal device 300 which has received the delivery of the emergency information controls an operation of a vehicle associated with the terminal device 300 has been described above as an example of operation control by the terminal device 300.

### (Notification to user)

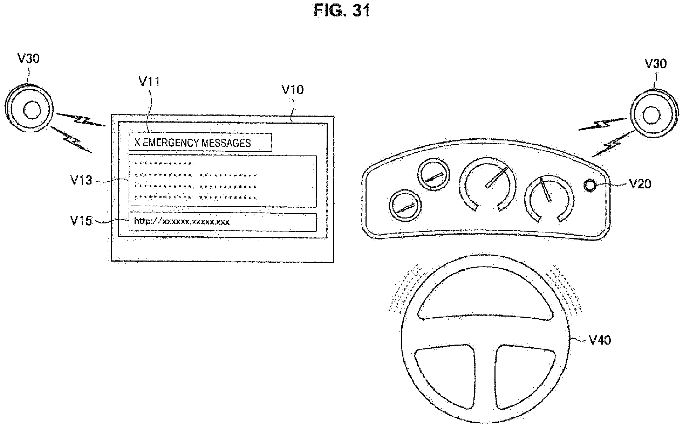

Next, an example of an operation in which the terminal device 300 reports information to the user in accordance with the content of the delivered message will be described with reference to FIG. 31. For example, FIG. 31 is an explanatory diagram for describing an example of an information report form from the terminal device 300 to the user.

In FIG. 31, as indicated by reference numeral V10, the terminal device 300 may present the report information in accordance with the content of the delivered message through, for example, a display unit such as a display of an in-vehicle device such as a navigation device or a screen installed in the vehicle to the user. As a more specific example, the terminal device 300 may present information V11 indicating that the message has been received or text information V13 (that is, the body of the message) included in the message as display information through the display unit.

Further, in a case in which a URL for accessing the response destination of the message is included in the message, the terminal device 300 may urge the user to refer to a link destination indicated by the URL (for example, a web page of the response destination) by presenting the URL through the display unit as indicated by reference numeral V15. Further, in a case in which the display unit includes a touch panel, the terminal device 300 may present an interface (for example, a button, or the like) for activating a function (for example, a browser or the like) in order to access the link destination indicated by the URL through the display unit. With such a configuration, the user can manipulate the interface presented on the display unit, access the web page of the response destination of the message, and transmits the response to the message.

Further, as another example, the terminal device 300 may report the reception of the message to the user by presenting a predetermined icon on a dashboard or turning on a light emitting diode (LED) or the like as indicated by reference numeral V20. Further, the terminal device 300 may give a notification indicating that the message has been received to the user by outputting a voice or a sound through an acoustic device such as an in-vehicle speaker as indicated by reference numeral V30. Further, the terminal device 300 may give a notification indicating that the message has been received to the user, for example, by causing a device (for example, a device to be gripped) manipulated by the user such as a handle as indicated by the reference numeral V40.

Further, the report method described above is merely an example, and the report method is not necessarily limited to the example described above. Further, it is not necessary to limit a method of reporting information to only one method, and, for example, a plurality of methods may be combined.

Further, there is no particular limitation on an opportunity at which the terminal device 300 reports information. As a specific example, in a case in which the terminal device 300 receives the message (for example, the emergency information), the terminal device 300 may report information to the user in accordance with the content of the message. Further, as a more specific example, as described above, the terminal device 300 may report information to the user in a case in which the terminal device 300 is recognized to be located within the caution area in accordance with the content of the delivered emergency information.

The example of the operation in which the terminal device 300 reports information to the user in accordance with the content of the delivered message has been described above with reference to FIG. 31.

### «5. Application examples»

The technology of the present disclosure can be applied to various products. For example, the communication control device 100 may be realized as a server of any type such as a tower server, a rack server, a blade server, or the like. In addition, at least some of these constituent elements of the communication control device 100 may be implemented by a module mounted in a server (e.g., an integrated circuit module configured in one die or a card or a blade inserted into a slot of a blade server).

Further, the base station 200 may be realized as any type of evolved node B (eNB), for example, a macro eNB, a small eNB, or the like. A small eNB may be an eNB that covers a smaller cell than a macro cell, such as a pico eNB, a micro eNB, or a home (femto) eNB. Alternatively, the base station 200 may be realized as another type of base station such as a node B or a base transceiver station (BTS). The base station 200 may include a main body that controls radio communication (also referred to as a base station device) and one or more remote radio heads (RRHs) disposed in a different place from the main body. In addition, various types of terminals to be described below may operate as the base station 200 by temporarily or semi-permanently executing the base station function. Further, at least some of constituent elements of the base station 200 may be implemented by the base station device or a module for the base station device.

In addition, the terminal device 300 may be realized as, for example, a mobile terminal such as a smartphone, a tablet personal computer (PC), a notebook PC, a portable game terminal, a portable/dongle type mobile router, or a digital camera, or an in-vehicle terminal such as a car navigation device. In addition, the terminal device 300 may be realized as a terminal that performs machine-to-machine (M2M) communication (also referred to as a machine type communication (MTC) terminal). Furthermore, at least some of constituent elements of the terminal device 300 may be implemented by a module mounted in such a terminal (for example, an integrated circuit module configured in one die).

### <5.1. Application example with regard to communication control device>

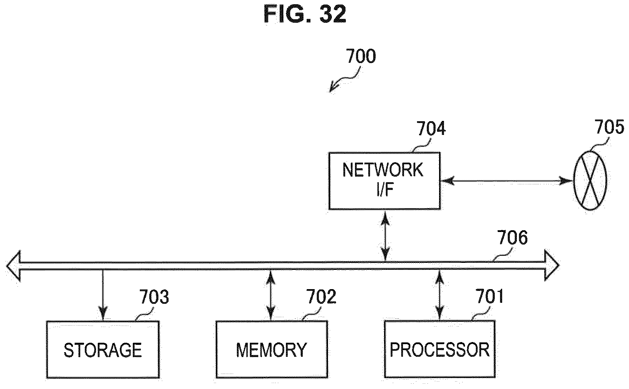

FIG. 32 is a block diagram illustrating an example of a schematic configuration of a server 700 to which the technology of the present disclosure may be applied. The server 700 includes a processor 701, a memory 702, a storage 703, a network interface 704, and a bus 706.

The processor 701 may be, for example, a central processing unit (CPU) or a digital signal processor (DSP) and controls various functions of the server 700. The memory 702 includes a random access memory (RAM) and a read only memory (ROM) and stores programs executed by the processor 701 and data. The storage 703 can include a storage medium such as a semiconductor memory or a hard disk.

The network interface 704 is a wired communication interface for connecting the server 700 to a wired communication network 705. The wired communication network 705 may be a core network such as an evolved packet core (EPC) or a packet data network (PDN) such as the Internet.

The bus 706 connects the processor 701, the memory 702, the storage 703, and the network interface 704 to each other. The bus 706 may include two or more buses that operate at different speeds (e.g., a high-speed bus and a low-speed bus).

In the server 700 illustrated in FIG. 32, the communication unit 110, the storage unit 120 and the control unit 130 described with reference to FIG. 5 may be implemented by the processor 701. As an example, a program for causing a processor to function as the communication unit 110, the storage unit 120 and the control unit 130 (i.e., a program for causing a processor to execute operations of the communication unit 110, the storage unit 120 and the control unit 130) may be installed in the server 700 and the processor 701 may execute the program. As another example, a module including the processor 701 and the memory 702 may be mounted in the server 700 and the communication unit 110, the storage unit 120 and the control unit 130 may be implemented by the module. In this case, the module may store a program for causing a processor to function as the communication unit 110, the storage unit 120 and the control unit 130 in the memory 702 and the program may be executed by the processor 701. The server 700 or the module may be provided as devices having the communication unit 110, the storage unit 120 and the control unit 130 as described above, or the program for causing a processor to function as the communication unit 110, the storage unit 120 and the control unit 130 may be provided. In addition, a readable recording medium in which the program is recorded may be provided.

### <5.2. Application example with regard to base station]

### (First application example)

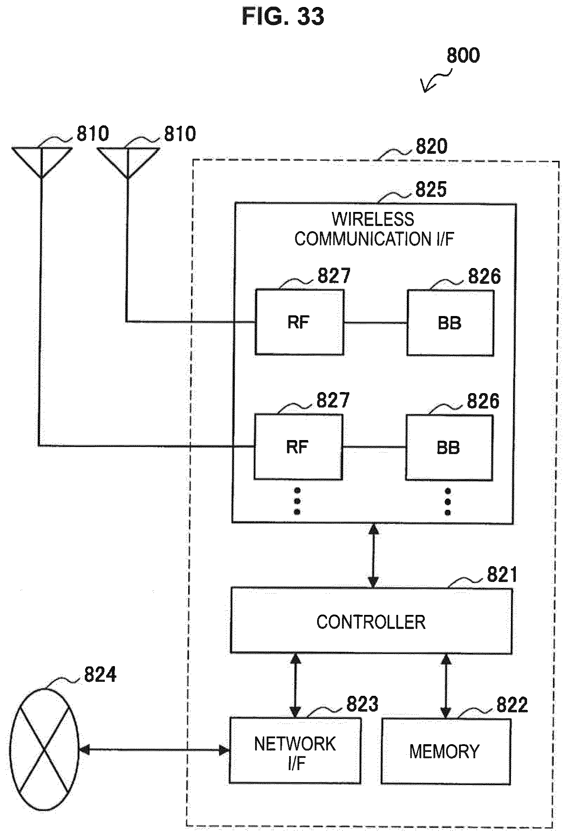

FIG. 33 is a block diagram illustrating a first example of a schematic configuration of an eNB to which the technology of the present disclosure may be applied. An eNB 800 includes one or more antennas 810 and a base station device 820. Each antenna 810 and the base station device 820 may be connected to each other via an RF cable.

Each of the antennas 810 includes a single or multiple antenna elements (such as multiple antenna elements included in an MIMO antenna), and is used for the base station device 820 to transmit and receive radio signals. The eNB 800 may include the multiple antennas 810, as illustrated in FIG. 33. For example, the multiple antennas 810 may be compatible with multiple frequency bands used by the eNB 800. Although FIG. 33 illustrates the example in which the eNB 800 includes the multiple antennas 810, the eNB 800 may also include a single antenna 810.

The base station device 820 includes a controller 821, a memory 822, a network interface 823, and a wireless communication interface 825.

The controller 821 may be, for example, a CPU or a DSP, and operates various functions of a higher layer of the base station device 820. For example, the controller 821 generates a data packet from data in signals processed by the wireless communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control, and scheduling. The control may be performed in corporation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station device 820 to a core network 824. The controller 821 may communicate with a core network node or another eNB via the network interface 823. In this case, the eNB 800 may be connected to a core network node or another eNB through a logical interface (e.g. S1 interface or X2 interface). The network interface 823 may also be a wired communication interface or a wireless communication interface for wireless backhaul. If the network interface 823 is a wireless communication interface, the network interface 823 may use a higher frequency band for wireless communication than a frequency band used by the wireless communication interface 825.

The wireless communication interface 825 supports any cellular communication scheme such as Long Term Evolution (LTE) and LTE-Advanced, and provides radio connection to a terminal positioned in a cell of the eNB 800 via the antenna 810. The wireless communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station device 820. Alternatively, the module may also be a chip that is mounted on the card or the blade. Meanwhile, the RF circuit 827 may include, for example, a mixer, a filter, and an amplifier, and transmits and receives radio signals via the antenna 810.

The wireless communication interface 825 may include the multiple BB processors 826, as illustrated in FIG. 33. For example, the multiple BB processors 826 may be compatible with multiple frequency bands used by the eNB 800. The wireless communication interface 825 may include the multiple RF circuits 827, as illustrated in FIG. 33. For example, the multiple RF circuits 827 may be compatible with multiple antenna elements. Although FIG. 33 illustrates the example in which the wireless communication interface 825 includes the multiple BB processors 826 and the multiple RF circuits 827, the wireless communication interface 825 may also include a single BB processor 826 or a single RF circuit 827.

In the eNB 800 shown in FIG. 33, the wireless communication unit 210, the network communication unit 220, the storage unit 230 and the control unit 240 described with reference to FIG. 6 may be implemented by the wireless communication interface 825. Alternatively, at least some of these constituent elements may be implemented by the controller 821. As an example, a module which includes a part (for example, the BB processor 826) or all of the wireless communication interface 825 and/or the controller 821 may be mounted in the eNB 800, and the wireless communication unit 210, the network communication unit 220, the storage unit 230 and the control unit 240 may be implemented by the module. In this case, the module may store a program for causing the processor to function as the wireless communication unit 210, the network communication unit 220, the storage unit 230 and the control unit 240 (i.e., a program for causing the processor to execute operations of the one or more constituent elements) and may execute the program. As another example, the program for causing the processor to function as the wireless communication unit 210, the network communication unit 220, the storage unit 230 and the control unit 240 may be installed in the eNB 800, and the wireless communication interface 825 (for example, the BB processor 826) and/or the controller 821 may execute the program. As described above, the eNB 800, the base station device 820 or the module may be provided as a device which includes the one or more constituent elements, and the program for causing the processor to function as the wireless communication unit 210, the network communication unit 220, the storage unit 230 and the control unit 240 may be provided. In addition, a readable recording medium in which the program is recorded may be provided.

In addition, in the eNB 800 shown in FIG. 33, the wireless communication unit 210 described with reference to FIG. 6 may be implemented by the wireless communication interface 825 (for example, the RF circuit 827). Moreover, the network communication unit 220 may be implemented by the controller 821 and/or the network interface 823. Further, the storage unit 230 may be implemented by the memory 822.

### (Second application example)

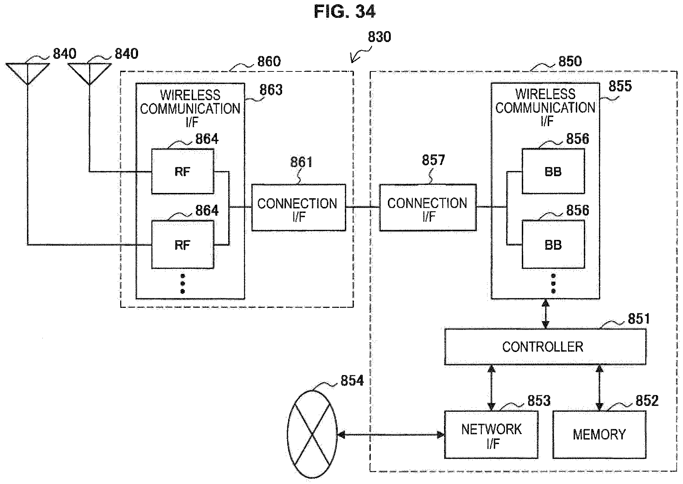

FIG. 34 is a block diagram illustrating a second example of a schematic configuration of an eNB to which the technology of the present disclosure may be applied. An eNB 830 includes one or more antennas 840, a base station device 850, and an RRH 860. Each antenna 840 and the RRH 860 may be connected to each other via an RF cable. The base station device 850 and the RRH 860 may be connected to each other via a high speed line such as an optical fiber cable.

Each of the antennas 840 includes a single or multiple antenna elements (such as multiple antenna elements included in an MIMO antenna), and is used for the RRH 860 to transmit and receive radio signals. The eNB 830 may include the multiple antennas 840, as illustrated in FIG. 34. For example, the multiple antennas 840 may be compatible with multiple frequency bands used by the eNB 830. Although FIG. 34 illustrates the example in which the eNB 830 includes the multiple antennas 840, the eNB 830 may also include a single antenna 840.

The base station device 850 includes a controller 851, a memory 852, a network interface 853, a wireless communication interface 855, and a connection interface 857. The controller 851, the memory 852, and the network interface 853 are the same as the controller 821, the memory 822, and the network interface 823 described with reference to FIG. 33.

The wireless communication interface 855 supports any cellular communication scheme such as LTE and LTE-Advanced, and provides wireless communication to a terminal positioned in a sector corresponding to the RRH 860 via the RRH 860 and the antenna 840. The wireless communication interface 855 may typically include, for example, a BB processor 856. The BB processor 856 is the same as the BB processor 826 described with reference to FIG. 33, except the BB processor 856 is connected to the RF circuit 864 of the RRH 860 via the connection interface 857. The wireless communication interface 855 may include the multiple BB processors 856, as illustrated in FIG. 34. For example, the multiple BB processors 856 may be compatible with multiple frequency bands used by the eNB 830. Although FIG. 34 illustrates the example in which the wireless communication interface 855 includes the multiple BB processors 856, the wireless communication interface 855 may also include a single BB processor 856.

The connection interface 857 is an interface for connecting the base station device 850 (wireless communication interface 855) to the RRH 860. The connection interface 857 may also be a communication module for communication in the above-described high speed line that connects the base station device 850 (wireless communication interface 855) to the RRH 860.

The RRH 860 includes a connection interface 861 and a wireless communication interface 863.

The connection interface 861 is an interface for connecting the RRH 860 (wireless communication interface 863) to the base station device 850. The connection interface 861 may also be a communication module for communication in the above-described high speed line.

The wireless communication interface 863 transmits and receives radio signals via the antenna 840. The wireless communication interface 863 may typically include, for example, the RF circuit 864. The RF circuit 864 may include, for example, a mixer, a filter, and an amplifier, and transmits and receives radio signals via the antenna 840. The wireless communication interface 863 may include multiple RF circuits 864, as illustrated in FIG. 34. For example, the multiple RF circuits 864 may support multiple antenna elements. Although FIG. 34 illustrates the example in which the wireless communication interface 863 includes the multiple RF circuits 864, the wireless communication interface 863 may also include a single RF circuit 864.

In the eNB 830 shown in FIG. 34, the wireless communication unit 210, the network communication unit 220, the storage unit 230 and the control unit 240 described with reference to FIG. 6 may be implemented by the wireless communication interface 855 and/or the wireless communication interface 863. Alternatively, at least some of these constituent elements may be implemented by the controller 851. As an example, a module which includes a part (for example, the BB processor 856) or all of the wireless communication interface 855 and/or the controller 851 may be mounted in the eNB 830, and the wireless communication unit 210, the network communication unit 220, the storage unit 230 and the control unit 240 may be implemented by the module. In this case, the module may store a program for causing the processor to function as the wireless communication unit 210, the network communication unit 220, the storage unit 230 and the control unit 240 (i.e., a program for causing the processor to execute operations of the one or more constituent elements) and may execute the program. As another example, the program for causing the processor to function as the wireless communication unit 210, the network communication unit 220, the storage unit 230 and the control unit 240 may be installed in the eNB 830, and the wireless communication interface 855 (for example, the BB processor 856) and/or the controller 851 may execute the program. As described above, the eNB 830, the base station device 850 or the module may be provided as a device which includes the wireless communication unit 210, the network communication unit 220, the storage unit 230 and the control unit 240, and the program for causing the processor to function as the wireless communication unit 210, the network communication unit 220, the storage unit 230 and the control unit 240 may be provided. In addition, a readable recording medium in which the program is recorded may be provided.

In addition, in the eNB 830 shown in FIG. 34, the wireless communication unit 210 described, for example, with reference to FIG. 4 may be implemented by the wireless communication interface 863 (for example, the RF circuit 864). Moreover, the network communication unit 220 may be implemented by the controller 851 and/or the network interface 853. Further, the storage unit 230 may be implemented by the memory 852.

### <5.3. Application example with regard to terminal device>

### (First application example)

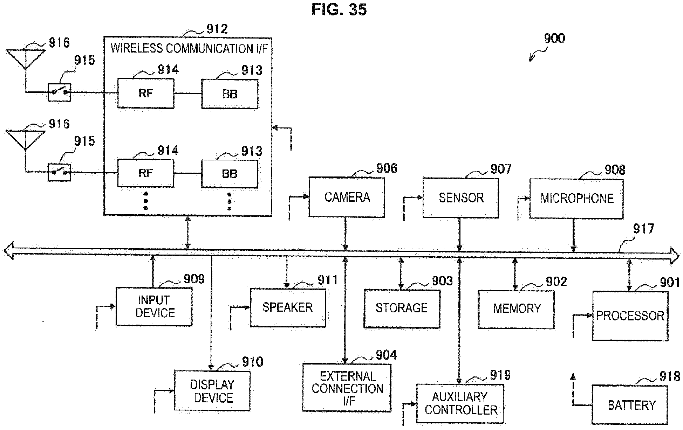

FIG. 35 is a block diagram illustrating an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication interface 912 supports any cellular communication scheme such as LTE and LTE-Advanced, and performs wireless communication. The wireless communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for wireless communication. Meanwhile, the RF circuit 914 may include, for example, a mixer, a filter, and an amplifier, and transmits and receives radio signals via the antenna 916. The wireless communication interface 912 may also be a one chip module that has the BB processor 913 and the RF circuit 914 integrated thereon. The wireless communication interface 912 may include the multiple BB processors 913 and the multiple RF circuits 914, as illustrated in FIG. 35. Although FIG. 35 illustrates the example in which the wireless communication interface 912 includes the multiple BB processors 913 and the multiple RF circuits 914, the wireless communication interface 912 may also include a single BB processor 913 or a single RF circuit 914.

Furthermore, in addition to a cellular communication scheme, the wireless communication interface 912 may support another type of wireless communication scheme such as a short-distance wireless communication scheme, a near field communication scheme, and a wireless local area network (LAN) scheme. In that case, the wireless communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication interface 912.

Each of the antennas 916 includes a single or multiple antenna elements (such as multiple antenna elements included in an MIMO antenna), and is used for the wireless communication interface 912 to transmit and receive radio signals. The smartphone 900 may include the multiple antennas 916, as illustrated in FIG. 35. Although FIG. 35 illustrates the example in which the smartphone 900 includes the multiple antennas 916, the smartphone 900 may also include a single antenna 916.

Furthermore, the smartphone 900 may include the antenna 916 for each wireless communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to blocks of the smartphone 900 illustrated in FIG. 35 via feeder lines, which are partially shown as dashed lines in the figure. The auxiliary controller 919 operates a minimum necessary function of the smartphone 900, for example, in a sleep mode.

In the smartphone 900 shown in FIG. 35, the wireless communication unit 310, the storage unit 320, the control unit 330 and the notifying unit 340 described with reference to FIG. 7 may be implemented by the wireless communication interface 912. Alternatively, at least some of these constituent elements may be implemented by the processor 901 or the auxiliary controller 919. As an example, a module which includes a part (for example, the BB processor 913) or all of the wireless communication interface 912, the processor 901 and/or the auxiliary controller 919 may be mounted in the smartphone 900, and the wireless communication unit 310, the storage unit 320, the control unit 330 and the notifying unit 340 may be implemented by the module. In this case, the module may store a program for causing the processor to function as the wireless communication unit 310, the storage unit 320, the control unit 330 and the notifying unit 340 (i.e., a program for causing the processor to execute operations of the wireless communication unit 310, the storage unit 320, the control unit 330 and the notifying unit 340) and may execute the program. As another example, the program for causing the processor to function as the wireless communication unit 310, the storage unit 320, the control unit 330 and the notifying unit 340 may be installed in the smartphone 900, and the wireless communication interface 912 (for example, the BB processor 913), the processor 901 and/or the auxiliary controller 919 may execute the program. As described above, the smartphone 900 or the module may be provided as a device which includes the one or more constituent elements, and the program for causing the processor to function as the wireless communication unit 310, the storage unit 320, the control unit 330 and the notifying unit 340 may be provided. In addition, a readable recording medium in which the program is recorded may be provided.

In addition, in the smartphone 900 shown in FIG. 35, the wireless communication unit 310 described, for example, with reference to FIG. 7 may be implemented by the wireless communication interface 912 (for example, the RF circuit 914). Moreover, the storage unit 320 may be implemented by the memory 902.

### (Second application example)

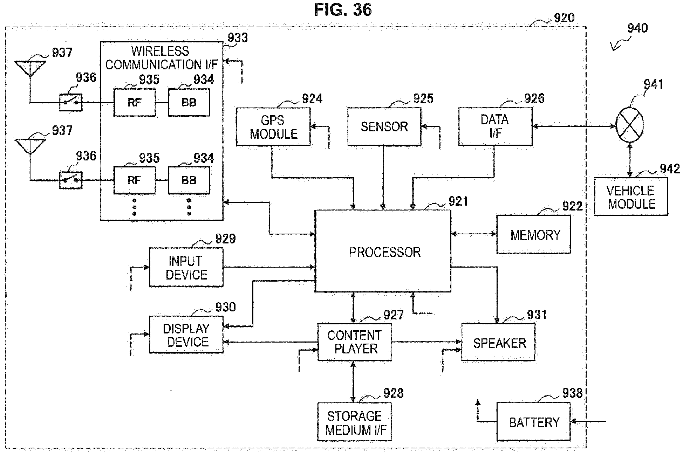

FIG. 36 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as a LCD or an OLED display, and displays an image of the navigation function or content that is reproduced. The speaker 931 outputs sounds of the navigation function or the content that is reproduced.

The wireless communication interface 933 supports any cellular communication scheme such as LET and LTE-Advanced, and performs wireless communication. The wireless communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives radio signals via the antenna 937. The wireless communication interface 933 may be a one chip module having the BB processor 934 and the RF circuit 935 integrated thereon. The wireless communication interface 933 may include the multiple BB processors 934 and the multiple RF circuits 935, as illustrated in FIG. 36. Although FIG. 36 illustrates the example in which the wireless communication interface 933 includes the multiple BB processors 934 and the multiple RF circuits 935, the wireless communication interface 933 may also include a single BB processor 934 or a single RF circuit 935.

Furthermore, in addition to a cellular communication scheme, the wireless communication interface 933 may support another type of wireless communication scheme such as a short-distance wireless communication scheme, a near field communication scheme, and a wireless LAN scheme. In that case, the wireless communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication interface 933.

Each of the antennas 937 includes a single or multiple antenna elements (such as multiple antenna elements included in an MIMO antenna), and is used for the wireless communication interface 933 to transmit and receive radio signals. The car navigation device 920 may include the multiple antennas 937, as illustrated in FIG. 36. Although FIG. 36 illustrates the example in which the car navigation device 920 includes the multiple antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in FIG. 36 via feeder lines that are partially shown as dashed lines in the figure. The battery 938 accumulates power supplied form the vehicle.

In the car navigation device 920 shown in FIG. 36, the wireless communication unit 310, the storage unit 320, the control unit 330 and the notifying unit 340 described with reference to FIG. 7 may be implemented by the wireless communication interface 933. Alternatively, at least some of these constituent elements may be implemented by the processor 921. As an example, a module which includes a part (for example, the BB processor 934) or all of the wireless communication interface 933 and/or the processor 921 may be mounted in the car navigation device 920, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the wireless communication unit 310, the storage unit 320, the control unit 330 and the notifying unit 340 may be installed in the car navigation device 920, and the wireless communication interface 933 (for example, the BB processor 934) and/or the processor 921 may execute the program. As described above, the car navigation device 920 or the module may be provided as a device which includes the wireless communication unit 310, the storage unit 320, the control unit 330 and the notifying unit 340, and the program for causing the processor to function as the wireless communication unit 310, the storage unit 320, the control unit 330 and the notifying unit 340 may be provided. In addition, a readable recording medium in which the program is recorded may be provided.

In addition, in the car navigation device 920 shown in FIG. 36, the wireless communication unit 310 described with reference to FIG. 7, for example, may be implemented by the wireless communication interface 933 (for example, the RF circuit 935). Moreover, the storage unit 320 may be implemented by the memory 922.

The technology of the present disclosure may also be realized as an in-vehicle system (or a vehicle) 940 including one or more blocks of the car navigation device 920, the in-vehicle network 941, and a vehicle module 942. In other words, the in-vehicle system (or a vehicle) 940 may be provided as a device which includes the wireless communication unit 310, the storage unit 320, the control unit 330 and the notifying unit 340. The vehicle module 942 generates vehicle data such as vehicle speed, engine speed, and trouble information, and outputs the generated data to the in-vehicle network 941. Note that the vehicle unit 390 described with reference to FIG. 7 corresponds to an example of the vehicle module 942.

### «6. Conclusion»

As described above, in the communication system 1 according to the present embodiment, if the terminal device 300 receives the delivery of the report information (that is, the message) from the base station 200, in a case in which the report information includes information of a predetermined type (for example, the emergency information or the like), the report information is redelivered to another terminal device 300. At this time, the terminal device 300 may redeliver the report information to another terminal device 300 via another system different from the system subordinate to the base station 200. Further, the report information to be redelivered may be caused to multihop between the terminal devices 300.

With such a configuration, according to the communication system 1 according to the present embodiment, for example, it is possible to cause the message such as the emergency information delivered from the base station 200 to reach the terminal device 300 located outside the communication area of the base station 200. Therefore, in the communication system 1 according to the present embodiment, it is possible to transmit a message to more terminal devices 300 located in a wider range directly or indirectly as compared with the case in which the message is delivered only to the terminal device 300 located in the communication area of the base station 200. In other words, according to the communication system 1 of the present embodiment, it is possible to report, for example, information requiring urgency such as the emergency information to more users in a more preferable form.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A device including:
   a communication unit configured to perform wireless communication;
   an acquiring unit configured to acquire report information from a first device via the wireless communication; and
   a communication control unit configured to perform control such that the report information is transmitted to a second device located within a predetermined communication range from the communication unit in a case in which the acquired report information includes information of a predetermined type.
(2) The device according to (1), in which the first device is a base station,
   the acquiring unit acquires information indicating a radio resource from the base station, and
   the communication control unit performs control such that the report information is transmitted to the second device from the communication unit via the radio resource.
(3) The device according to (2), in which the acquiring unit acquires the information indicating the radio resource from the base station after the base station is requested to allocate the radio resource.
(4) The device according to any one of (1) to (3), in which the communication control unit performs control such that the report information is transmitted to the second device on a basis of another communication scheme different from a communication scheme used in communication with the first device.
(5) The device according to any one of (1) to (4), in which the communication control unit performs control such that the report information is transmitted to the second device via another radio resource different from a radio resource used in communication with the first device.
(6) The device according to (1), in which the communication control unit performs control such that the report information is transmitted to the second device via a radio resource decided in advance.
(7) The device according to any one of (1) to (6), in which the communication control unit performs control such that the report information is transmitted to the second device belonging to another communication system different from a communication system to which the first device belongs.
(8) The device according to (1), in which the first device is a terminal, and
   the communication control unit controls transmission of the report information to the second device in accordance with a number of the terminals to which the report information is relayed before the report information transmitted from a base station is acquired by the acquiring unit.
(9) A device including:
   a communication unit configured to perform wireless communication; and
   a communication control unit configured to perform control such that a notification of information indicating a radio resource used for a first device to redeliver report information delivered to the first device to a second device is given from the communication unit to the first device.
(10) The device according to (9), in which the communication control unit performs control such that a notification of information indicating the radio resource is given to the first device located within a predetermined communication range.
(11) The device according to (9), in which the communication control unit performs control such that the report information is transmitted to the first device, and performs control such that a notification of the information indicating the radio resource is given to the first device to which the report information is transmitted.
(12) The device according to (11), in which the communication control unit performs control such that the notification of the information indicating the radio resource is given to the first device after a request related to allocation of the radio resource is received from the first device to which the report information is transmitted.
(13) A device including:
   a communication unit configured to perform wireless communication;
   an acquiring unit configured to acquire report information from an external device via the wireless communication; and
   a control unit configured to control an operation related to at least any one of a vehicle and a navigation device in accordance with content of the report information in a case in which the acquired report information includes information of a predetermined type.
(14) The device according to (13), in which the report information includes information related to an event that has occurred, and
   the control unit controls the operation related to the navigation device such that information related to the event is presented.
(15) The device according to (14), in which the report information includes information related to a position at which the event has occurred, and
   the control unit controls the operation related to the navigation device such that the information related to the position at which the event has occurred is presented on map information.
(16) The device according to (15), in which the control unit presents the position at which the event has occurred in association with a position on the map information.
(17) The device according to (15), in which the control unit presents information indicating a direction of the position at which the event has occurred on the map information.
(18) The device according to any one of (13) to (17), in which the report information includes information related to an event that has occurred, and
   the control unit controls the operation of the vehicle in accordance with the information related to the event.
(19) A method including:
   performing wireless communication;
   acquiring report information from a first device via the wireless communication; and
   performing, by a processor, control such that the report information is transmitted to a second device located within a predetermined communication range in a case in which the acquired report information includes information of a predetermined type.
(20) A method including:
   performing wireless communication; and
   performing, by a processor, control such that a notification of information indicating a radio resource used for a first device to redeliver report information delivered to the first device to a second device is given to the first device.
(21) A method including:
   performing wireless communication;
   acquiring report information from an external device via the wireless communication; and
   controlling, by a processor, an operation related to at least any one of a vehicle and a navigation device in accordance with content of the report information in a case in which the acquired report information includes information of a predetermined type.
(22) A program causing a computer to execute:
   performing wireless communication;
   acquiring report information from an external device via the wireless communication; and
   controlling an operation related to at least any one of a vehicle and a navigation device in accordance with content of the report information in a case in which the acquired report information includes information of a predetermined type.

### Reference Signs List

- 1: communication system
- 100: communication control device
- 110: communication unit
- 120: storage unit
- 120: wireless communication unit
- 130: control unit
- 200: base station
- 210: wireless communication unit
- 220: network communication unit
- 230: storage unit
- 240: control unit
- 300: terminal device
- 310: wireless communication unit
- 320: storage unit
- 330: control unit
- 340: notifying unit
- 390: vehicle unit

## Claims

1. A device comprising:
a communication unit configured to perform wireless communication;
an acquiring unit configured to acquire report information from a first device via the wireless communication; and
a communication control unit configured to perform control such that the report information is transmitted to a second device located within a predetermined communication range from the communication unit in a case in which the acquired report information includes information of a predetermined type.

2. The device according to claim 1, wherein the first device is a base station, the acquiring unit acquires information indicating a radio resource from the base station, and
the communication control unit performs control such that the report information is transmitted to the second device from the communication unit via the radio resource.

3. The device according to claim 2, wherein the acquiring unit acquires the information indicating the radio resource from the base station after the base station is requested to allocate the radio resource.

4. The device according to claim 1, wherein the communication control unit performs control such that the report information is transmitted to the second device on a basis of another communication scheme different from a communication scheme used in communication with the first device.

5. The device according to claim 1, wherein the communication control unit performs control such that the report information is transmitted to the second device via another radio resource different from a radio resource used in communication with the first device.

6. The device according to claim 1, wherein the communication control unit performs control such that the report information is transmitted to the second device via a radio resource decided in advance.

7. The device according to claim 1, wherein the communication control unit performs control such that the report information is transmitted to the second device belonging to another communication system different from a communication system to which the first device belongs.

8. The device according to claim 1, wherein the first device is a terminal, and the communication control unit controls transmission of the report information to the second device in accordance with a number of the terminals to which the report information is relayed before the report information transmitted from a base station is acquired by the acquiring unit.

9. A device comprising:
a communication unit configured to perform wireless communication; and
a communication control unit configured to perform control such that a notification of information indicating a radio resource used for a first device to redeliver report information delivered to the first device to a second device is given from the communication unit to the first device.

10. The device according to claim 9, wherein the communication control unit performs control such that a notification of information indicating the radio resource is given to the first device located within a predetermined communication range.

11. The device according to claim 9, wherein the communication control unit performs control such that the report information is transmitted to the first device, and performs control such that a notification of the information indicating the radio resource is given to the first device to which the report information is transmitted.

12. The device according to claim 11, wherein the communication control unit performs control such that the notification of the information indicating the radio resource is given to the first device after a request related to allocation of the radio resource is received from the first device to which the report information is transmitted.

13. A device comprising:
a communication unit configured to perform wireless communication;
an acquiring unit configured to acquire report information from an external device via the wireless communication; and
a control unit configured to control an operation related to at least any one of a vehicle and a navigation device in accordance with content of the report information in a case in which the acquired report information includes information of a predetermined type.

14. The device according to claim 13, wherein the report information includes information related to an event that has occurred, and
the control unit controls the operation related to the navigation device such that information related to the event is presented.

15. The device according to claim 14, wherein the report information includes information related to a position at which the event has occurred, and
the control unit controls the operation related to the navigation device such that the information related to the position at which the event has occurred is presented on map information.

16. The device according to claim 15, wherein the control unit presents the position at which the event has occurred in association with a position on the map information.

17. The device according to claim 15, wherein the control unit presents information indicating a direction of the position at which the event has occurred on the map information.

18. The device according to claim 13, wherein the report information includes information related to an event that has occurred, and
the control unit controls the operation of the vehicle in accordance with the information related to the event.

19. A method comprising:
performing wireless communication;
acquiring report information from a first device via the wireless communication; and
performing, by a processor, control such that the report information is transmitted to a second device located within a predetermined communication range in a case in which the acquired report information includes information of a predetermined type.

20. A method comprising:
performing wireless communication; and
performing, by a processor, control such that a notification of information indicating a radio resource used for a first device to redeliver report information delivered to the first device to a second device is given to the first device.

21. A method comprising:
performing wireless communication;
acquiring report information from an external device via the wireless communication; and
controlling, by a processor, an operation related to at least any one of a vehicle and a navigation device in accordance with content of the report information in a case in which the acquired report information includes information of a predetermined type.

22. A program causing a computer to execute:
performing wireless communication;
acquiring report information from an external device via the wireless communication; and
controlling an operation related to at least any one of a vehicle and a navigation device in accordance with content of the report information in a case in which the acquired report information includes information of a predetermined type.
